# EUROPEAN PATENT APPLICATION

(11) **EP 4 322 701 A1**
(43) Date of publication of application: **14.02.2024**
(21) Application number: 22799163.5
(22) Date of filing: 06.05.2022
(51) Int. Cl.: H04W 76/25, H04W 76/27, H04W 76/15, H04W 88/08, H04W 88/06

(54) **APPARATUS AND METHOD FOR SUPPORTING NETWORK SWITCHING OF USER EQUIPMENT IN WIRELESS COMMUNICATION SYSTEM**

(30) Priority: 07.05.2021 KR 20210059555
(71) Applicant: Samsung Electronics Co., Ltd., Suwon-si, Gyeonggi-do 16677 (KR)
(72) Inventor: BAE, Beomsik, Suwon-si, Gyeonggi-do 16677 (KR); JUNG, Sangyeob, Suwon-si, Gyeonggi-do 16677 (KR)
(74) Representative: Gulde & Partner
(86) International application number: PCT/KR2022/006508
(87) International publication number: WO 2022/235120

(57) **Abstract**

The present disclosure relates to a 5G or 6G communication system for supporting a higher data transmission rate. A method performed by a secondary node (SN) base station in a wireless communication system according to one embodiment of the present disclosure comprises the steps of: receiving a first message comprising gap configuration auxiliary information from a multiple universal subscriber identity module user equipment (MUSIM UE) having configured dual connectivity with the SN base station and a master node (MN) base station; generating scheduling gap configuration information for controlling scheduling for the MUSIM UE, on the basis of the gap configuration auxiliary information; and transmitting a second message comprising the generated scheduling gap configuration information to the MUSIM UE.

## Description

### [Technical Field]

The disclosure generally relates to a wireless communication system and, more specifically, to a device and method for supporting network switching of LTE supporting multiple universal subscriber identify modules (MUSIMs) in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial state of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on LTE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Solution]

In a wireless communication system according to an embodiment of the disclosure, a method performed by a secondary node (SN) base station includes receiving a first message including gap configuration auxiliary information from a multiple universal subscriber identity module (MUSIM) user equipment (UE) (MUSIM UE) for which dual-connectivity with the SN base station and a master node (MN) base station has been configured, generating scheduling gap configuration information for adjustment of scheduling for the MUSIM UE, based on the gap configuration auxiliary information, and transmitting a second message including the generated scheduling gap configuration information to the MUSIM UE.

### [Advantageous Effects]

A device and method according to embodiments of the disclosure enables configuration of a scheduling gap without changing a radio resource control (RRC) connection state during network switching.

A device and method according to embodiments of the disclosure enables switching of an RRC connection state to RRC idle or RRC inactive during network switching.

Advantageous effects obtainable from the disclosure may not be limited to the above-mentioned effects, and other effects which are not mentioned may be clearly understood, through the following descriptions, by those skilled in the art to which the disclosure pertains.

### [Description of Drawings]

FIG. 1 illustrates examples of a wireless communication system according to embodiments of the disclosure;
FIG. 2 illustrates an example of a base station structure according to embodiments of the disclosure;
FIG. 3 illustrates an example of signaling for configuring a scheduling gap for network switching to another network from one network connected by dual-connectivity (DC) according to embodiments of the disclosure;
FIG. 4 illustrates an example of signaling for configuring a scheduling gap with an SN base station via an MN base station, for network switching to another network from one network connected by dual-connectivity (DC) according to embodiments of the disclosure;
FIG. 5 illustrates an example of signaling for configuring a scheduling gap with an MN base station, for network switching to another network from one network connected by dual-connectivity (DC) according to embodiments of the disclosure;
FIG. 6 illustrates an example of signaling for connection release by using a non-access stratum (NAS) message, for network switching according to embodiments of the disclosure;
FIG. 7 illustrates an operation flow of a base station for RRC state transition during network switching according to embodiments of the disclosure;
FIG. 8 illustrates an example of signaling for connection release by using a non-access stratum (NAS) message, for network switching according to embodiments of the disclosure;
FIG. 9 illustrates an operation flow of a core network entity for RRC state transition, during network switching according to embodiments of the disclosure;
FIG. 10 illustrates an example of signaling for connection release by using a non-access stratum (NAS) message, for network switching according to embodiments of the disclosure;
FIG. 11 illustrates an operation flow of a core network entity for RRC state transition, during network switching according to embodiments of the disclosure;
FIG. 12 illustrates an example of signaling for priority processing of RRC connection release message transmission in a DU, during network switching according to embodiments of the disclosure;
FIG. 13 illustrates a configuration example of a message (e.g., a LTE network switching indication) which is transmitted to a base station from a core network and indicates that a network switching operation has been requested;
FIG. 14A illustrates a configuration example of a connection release command message (e.g., a LTE context release command message) for a corresponding LTE, which is with respect to a base station and a core network and is transmitted from the core network to the base station in order to support a network switching operation of a MUSIM LTE;
FIG. 14B illustrates a configuration example of a connection release command message (e.g., a LTE context release command message) for a corresponding LTE, which is transmitted to a DU from a CU in a base station;
FIG. 15A illustrates a configuration example of a connection release request message (e.g., a LTE context release request message) for a corresponding LTE, which is with respect to a base station and a core network and is transmitted from the base station to the core network in order to support a network switching operation of a MUSIM LTE;
FIG. 15B illustrates a configuration example of a message (e.g., an RRC inactive transition report message) which indicates that a corresponding LTE has transitioned to RRC inactive, and is transmitted from a base station to a core network in order to support a network switching operation of a MUSIM LTE;
FIG. 16 illustrates an example of a functional configuration of a base station according to embodiments of the disclosure;
FIG. 17 illustrates an example of a functional configuration of a core network entity according to embodiments of the disclosure; and
FIG. 18 illustrates an example of a functional configuration of a MUSIM LTE according to embodiments of the disclosure.

### [Mode for Invention]

A method performed by a secondary node (SN) base station in a wireless communication system according to an embodiment of the disclosure includes receiving a first message including gap configuration auxiliary information from a multiple universal subscriber identity module (MUSIM) user equipment (UE) (MUSIM UE) for which dual-connectivity with the SN base station and a master node (MN) base station has been configured, generating scheduling gap configuration information for adjustment of scheduling for the MUSIM UE, based on the gap configuration auxiliary information, and transmitting a second message including the generated scheduling gap configuration information to the MUSIM UE.

In an embodiment, the gap configuration auxiliary information may include at least one among information including at least one of a gap offset, a gap duration, and a gap period, a short-time network switching indication for periodic transmission and/or one-shot transmission (short-time network switching indication for periodic and/or one-shot), a preferred scheduling gap for the periodic transmission and/or the one-shot transmission (preferred scheduling gap for periodic and/or one-shot), and discontinuous reception (DRX) configuration assistance information (DRX assistance information).

In an embodiment, the scheduling gap configuration information may include at least one of radio resource management (RRM) measurement gap configuration information and information including at least one of a gap offset, a gap duration, and a gap period.

In an embodiment, the receiving of the first message including the gap configuration auxiliary information may include receiving the first message including the gap configuration auxiliary information via the MN base station, and the transmitting of the generated scheduling gap configuration information to the MUSIM UE may include transmitting the second message including the gap configuration information to the MUSIM LTE via the MN base station.

A method performed by a master node (MN) base station in a wireless communication system according to another embodiment of the disclosure includes receiving a first message including gap configuration auxiliary information from a multiple universal subscriber identity module (MUSIM) user equipment (UE) for which dual-connectivity with the MN base station and a secondary node (SN) base station has been configured, generating scheduling gap configuration information for adjustment of scheduling for the MUSIM UE, based on the gap configuration auxiliary information, and transmitting a second message including the generated scheduling gap configuration information to the MUSIM UE.

In an embodiment, the generating of the scheduling gap configuration information for adjustment of scheduling for the MUSIM LTE, based on the gap configuration auxiliary information may include transmitting the gap configuration auxiliary information to the SN base station, receiving scheduling gap configuration information of the SN base station from the SN base station in response to the gap configuration auxiliary information, and generating the scheduling gap configuration information for adjustment of scheduling for the MUSIM UE, based on a scheduling gap of the SN base station and scheduling gap configuration information of the MN base station.

In an embodiment, the method may further include transmitting the generated scheduling gap configuration information to the SN base station.

A method performed by a base station in a wireless communication system according to another embodiment of the disclosure may include determining to transition a multiple universal subscriber identity module (MUSIM) user equipment (UE) to one of a radio resource control (RRC) idle state or an RRC inactive state, and if it is determined to transition the MUSIM UE to the RRC inactive state, transmitting, to the MUSIM LTE, an RRC connection release message indicating transition to the RRC inactive state, and transmitting, to an access and mobility management function (AMF), a report message notifying that the MUSIM UE has transitioned to the inactive state.

In an embodiment, the report message may include a cause information element (IE) indicating a cause for connection release of the MUSIM UE.

In an embodiment, the method may further include receiving a network switching indication (UE network switching indication) message from the AMF.

In an embodiment, the method may further include, when it is determined to switch the UE to the RRC idle state, transmitting a connection release request message for the MUSIM UE to the AMF, wherein the connection release request message for the MUSIM UE may include a cause IE indicating a cause for connection release of the MUSIM UE.

A method performed by an access and mobility management function (AMF) in a wireless communication system according to another embodiment of the disclosure may include receiving a non-access stratum (NAS) message including information for requesting of connection release from a network by a multiple universal subscriber identity module (MUSIM) user equipment (UE), determining, based on the NAS message, to transition the MUSIM UE to one of a radio resource control (RRC) idle state or an RRC inactive state, and if it is determined to transition the MUSIM LTE to the RRC inactive state, transmitting a network switching indication (LTE network switching indication) message to a base station.

In an embodiment, the method may further include receiving, from the base station, a report message indicating that the MUSIM UE has transitioned to the RRC inactive state, in response to the network switching indication message.

In an embodiment, the method may further include, when it is determined to switch the MUSIM LTE to the RRC idle state, transmitting a MUSIM LTE connection release command message to the base station, wherein the MUSIM UE connection release command message includes a cause information element (IE) indicating a cause for connection release of the MUSIM UE.

In an embodiment, the method may further include updating paging restriction information for the MUSIM UE.

A secondary node (SN) base station of a wireless communication system according to another embodiment of the disclosure may include at least one transceiver and at least one processor, wherein the at least one processor is configured to perform control to receive a first message including gap configuration auxiliary information from a multiple universal subscriber identity module (MUSIM) user equipment (UE) for which dual-connectivity with the SN base station and a master node (MN) base station has been configured, generate scheduling gap configuration information for adjustment of scheduling for the MUSIM UE, based on the gap configuration auxiliary information, and transmit a second message including the generated scheduling gap configuration information to the MUSIM UE.

A master node (MN) base station of a wireless communication system according to another embodiment of the disclosure may include at least one transceiver and at least one processor, wherein the at least one processor is configured to perform control to receive a first message including gap configuration auxiliary information from a multiple universal subscriber identity module (MUSIM) user equipment (UE) for which dual-connectivity with the MN base station and a secondary node (SN) base station has been configured, generate scheduling gap configuration information for adjustment of scheduling for the MUSIM UE, based on the gap configuration auxiliary information, and transmit a second message including the generated scheduling gap configuration information to the MUSIM UE.

A base station in a wireless communication system according to another embodiment of the disclosure may be configured to determine to transition a multiple universal subscriber identity module (MUSIM) user equipment (UE) to one of a radio resource control (RRC) idle state or an RRC inactive state, and if it is determined to transition the MUSIM UE to the RRC inactive state, transmit, to the MUSIM UE, an RRC connection release message indicating transition to the RRC inactive state, and transmit, to an access and mobility management function (AMF), a report message notifying that the MUSIM UE has transitioned to the inactive state.

An access and mobility management function (AMF) in a wireless communication system according to another embodiment of the disclosure may be configured to receive a non-access stratum (NAS) message including information for requesting of connection release from a network by a multiple universal subscriber identity module (MUSIM) user equipment (UE), determine, based on the NAS message, to transition the MUSIM UE to one of a radio resource control (RRC) idle state or an RRC inactive state, and if it is determined to transition the MUSIM LTE to the RRC inactive state, transmit a network switching indication (UE network switching indication) message to a base station.

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms related to signals and messages (e.g., RRC signaling, message, signal, NAS message, and NAS signaling) are described based on the terms that are currently defined by 3GPP LTE or NR standards, but other terms having equivalent technical meanings may be used. Also, terms referring to network entities (e.g., base station, terminal, communication node, radio node, radio unit, network node, master node (MN), secondary node (SN), transmission/reception point (TRP), digital unit (DU), radio unit (RU), RAN node, eNB, gNB, AMF, DU, RU, and CU), and the like are described for the sake of explanation of embodiments. Therefore, the disclosure is not limited by the terms as used below, and other terms having equivalent technical meanings may be used.

In the disclosure, various embodiments will be described using terms employed in some communication standards (e.g., long term evolution (LTE) or new radio (NR) defined by the 3rd generation partnership project (3GPP)). 3GPP mobile communication systems as handled herein may include both 4th generation (4G, hereinafter "LTE (long term evolution)") and 5th generation (5G, hereinafter "NR (new radio)"). However, in addition to the 3GPP mobile communication systems, embodiments of the disclosure may also be easily applied to other communication systems through modifications.

As used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

Dual-connectivity (DC) technology which is a type of multi-connectivity has been introduced from 3rd Generation Partnership Project (3GPP) Standard Release 12. The dual-connectivity is a technology in which a UE is simultaneously connected to two independent heterogeneous or homogeneous wireless communication cell groups having a separate radio resource control entity, and uses, for signal transmission or reception, a frequency resource on a component carrier of a cell in each of cell groups located in different frequency bands, thereby enhancing frequency use efficiency of the UE and a base station. The dual-connectivity includes a master cell group in which a control plane is directly connected to a core network so as to manage a radio resource control state of a LTE, and a secondary cell group interworking with the master cell group.

In the disclosure, a situation in which a LTE is switched to another network in a dual-connectivity situation is described. Various embodiments of the disclosure may be applied to a UE for performing network switching, related base stations, and a core network entity in situations, defined in the 3GPP standards, of: evolved universal terrestrial radio access-new radio dual-connectivity (EN-DC) connected to a 4G core network between a 4G master cell group and a 5G secondary cell group; NG-RAN evolved universal terrestrial radio access-new radio dual-connectivity (NGEN-DC) connected to a 5G core network between a 4G master cell group and a 5G secondary cell group; new radio-evolved universal terrestrial radio-access dual-connectivity (NE-DC) connected to a 5G core network between a 4G secondary cell group and a 5G master cell group; and multi-radio dual-connectivity (MR-DC) including new radio dual-connectivity (NR-DC) connected between 5G cell groups. Hereinafter, in each embodiment, two base stations are illustrated, but such example is not interpreted as limiting the number of base stations for multi-connectivity according to embodiments of the disclosure.

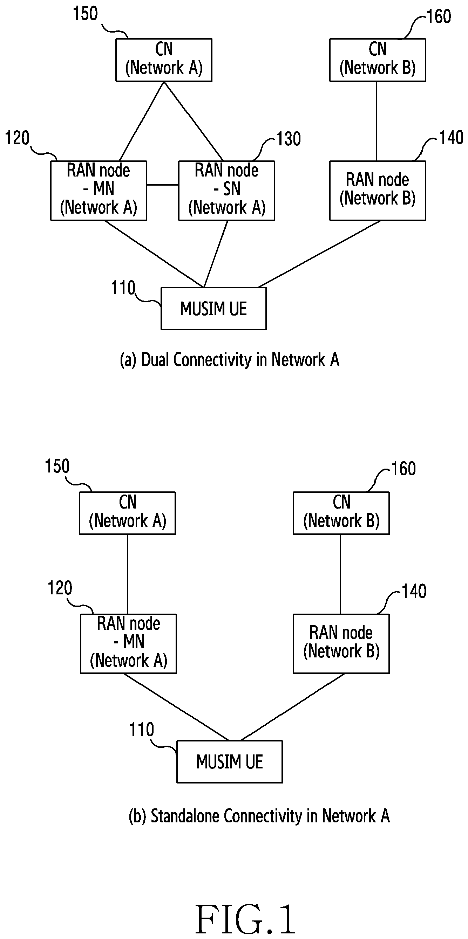

FIG. 1 illustrates examples of a wireless communication system according to embodiments of the disclosure. FIG. 1 illustrates examples of structures of a next-generation mobile communication system to which embodiments of the disclosure may be applied. A multi-subscriber identification module or multi-universal subscriber identification module (MUSIM) UE 110 specified in the structure of FIG. 1 refers to a UE capable of being connected to one or more mobile communication networks with one or more subscriber identification modules (SIMs) or universal subscriber identification modules (USIMs). A radio-access network (RAN) node specified in FIG. 1 may refer to a mobile communication base station connected to a core network (CN), such as an evolved packet core (EPC) or a 5G core network (5GC). For example, the RAN node is a base station and may refer to an LTE eNB. In addition, for example, the RAN node is a base station and may refer to an NR gNB.

Referring to FIG. 1, in (a) of FIG. 1, the MUSIM UE 110 may be connected to two networks, i.e., network A and network B. The MUSIM UE 110 may be connected to one network (network A in (a) of FIG. 1), wherein a base station 120 operating as a master node (MN) and a base station 130 operating as a secondary node (SN) are connected using dual-connectivity (DC). In addition, the MUSIM LTE 110 may be connected to a base station 140 of another network (network B in (a) of FIG. 1). The base stations of network A, i.e., the MN base station 120 and the SN base station 130, are connected to a core network 150 of network A, and the base station 140 of network B is connected to a core network 160 of network B. In addition, the base stations of network A, i.e., the MN base station 120 and the SN base station 130, may operate in connection with each other.

In (b) of FIG. 1, the MUSIM LTE 110 may be connected to two networks, i.e., network A and network B. That is, in (b) of FIG. 1, the MUSIM UE 110 may be in a "standalone" connected state in network A. The MUSIM LTE 110 is connected to the base station 120 of one network (network A in (b) of FIG. 1), and the MUSIM UE 110 may be connected to the base station 140 of another network (network B in (b) of FIG. 1). The base station 120 of network A is connected to the core network 150 of network A, and the base station 140 of network B is connected to the core network 160 of network B.

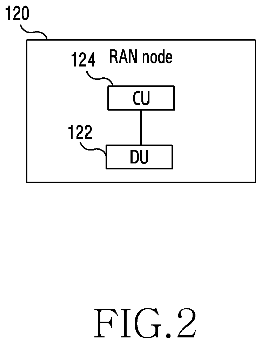

FIG. 2 illustrates an example of a base station structure according to embodiments of the disclosure. FIG. 2 illustrates an example of a structure of a base station in a next-generation mobile communication system to which embodiments of the disclosure may be applied.

Referring to FIG. 2, the base station 120 may include a central unit (CU) 124 and a distribution unit (DU) 122. In an embodiment, the base station 120 may include one CU 124 and one or more DUs 122 connected thereto, or may be configured by another combination. The CU 124 and the DU 122 may separately support respective base station functions. For example, the CU 124 may support a radio resource control (RRC) layer and a packet data convergence protocol (PDCP) layer, and the DU 122 may support a radio link control (RLC) layer, a medium access control (MAC) layer, and a physical (PHY) layer. An interface between base station internal functions, such as an F1 interface (interface between gNB-CU and gNB-DU) or a W1 interface (interface between eNB-CU and eNB-DU), may be connected between the CU 124 and the DU 122. In an embodiment, respective DUs may be separately configured into a part supporting RLC/MAC/high-PHY layers and a part supporting low-PHY/RF layers. For example, a DU may be connected to a separate entity referred to as a radio unit (RU), and the RU may perform a low-PHY/RF layer function.

One CU-DU is illustrated in FIG. 2, and this indicates that a RAN node may logically include one CU and one DU, but is not interpreted as limiting a distributed structure of the RAN node. That is, a distributed arrangement structure, in which not only one DU is connected to one CU but also multiple DUs are connected to one CU, may also be understood as an embodiment of the disclosure.

In embodiments to be described later, the MUSIM UE 110 may be connected to one network (network A in an embodiment), and then may temporarily be connected to and perform reception from another network (network B in an embodiment) (signal measurement, paging message reception, or registration update in an embodiment). To this end, the MUSIM UE 110 may temporarily switch a network while maintaining an RRC connection to the network (network A in an embodiment) to which the MUSIM UE 110 is connected. While the MUSIM LTE 110 is being connected to and performing reception from another network (network B in one embodiment), in order to prevent unnecessary transmission/reception in the network (network A in an embodiment) to which the MUSIM UE 110 is connected, the MUSIM UE 110 may request configuration of a scheduling gap from a base station (e.g., the base station of network A in an embodiment). In addition, when the MUSIM UE 110 is connected to one network (network A in an embodiment) and then a connection service (a voice call connection and a data call connection in an embodiment) to another network (network B in an embodiment) occurs, a request for releasing the RRC connection to the network (network A in an embodiment) to which the MUSIM UE 110 is connected may be made.

In embodiments to be described later, according to an internal service operation of the MUSIM UE 110, a request for scheduling gap configuration may be made to the base station (the base station of network A in an embodiment), and a request for releasing the RRC connection to the connected network (network A in an embodiment) may be made. Hereinafter, embodiments of the disclosure provide a method exchanging and processing control information between a base station and a core network and/or between a CU and a DU in a base station in order to prevent unnecessary transmission/reception (e.g., transmission of user data and a control signal, such as an RRC message, and/or paging transmission) in a connected network (network A in an embodiment) and to efficiently manage an RRC state of the MUSIM UE.

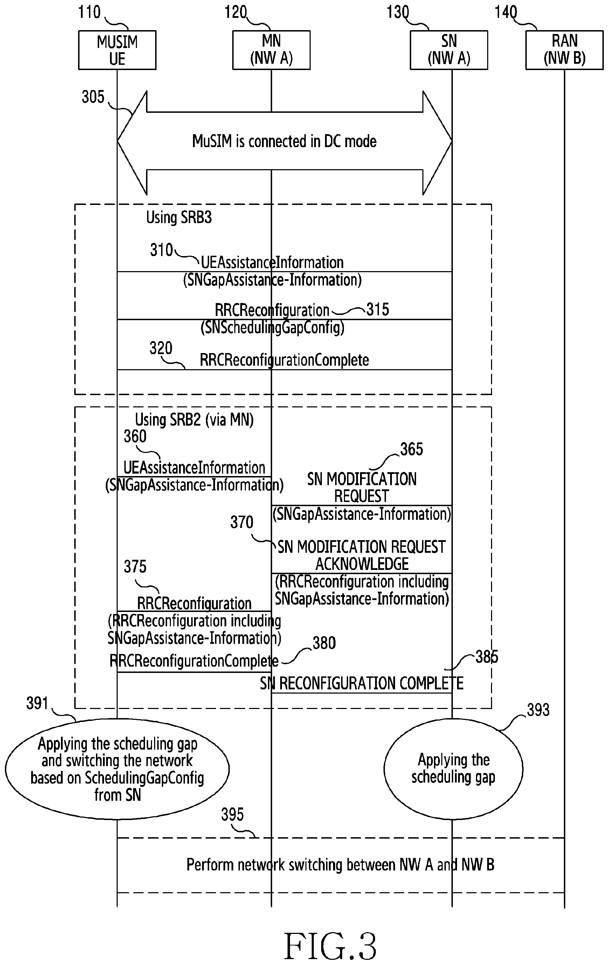

FIG. 3 illustrates an example of signaling for configuring a scheduling gap for network switching to another network from one network connected by dual-connectivity (DC) according to embodiments of the disclosure. In FIG. 3, the MUSIM UE is connected to two base stations, i.e., an MN and an SN, by dual-connectivity (DC) in one network (e.g., network A). In FIG. 3, description is provided for a procedure for configuring a scheduling gap with the SN base station by the MUSIM UE in order to perform temporary network switching to another network.

Referring to FIG. 3, as in (a) of FIG. 1, the MUSIM LTE 110 may be connected to two networks, i.e., network A and network B. The MUSIM UE 110 may be connected to one network (network A in (a) of FIG. 1), wherein the base station 120 operating as a master node (MN) and the base station 130 operating as a secondary node (SN) are concurrently connected using dual-connectivity (DC). The MUSIM UE 110 may perform network switching to the base station 140 of another network (network B in (a) of FIG. 1). In an embodiment, the MUSIM UE 110 may temporarily perform network switching from network A to network B. In this case, the SN base station 130 of network A may configure a scheduling gap for temporarily suspending transmission or reception of the MUSIM UE 110. In FIG. 3, a signal flow for describing a procedure for configuring a scheduling gap of the SN base station 130 is illustrated. According to an embodiment, the MUSIM LTE 110 may perform a procedure of configuring a scheduling gap with the SN base station 130 via the MN base station 120. According to an embodiment, the MUSIM LTE 110 may perform a procedure of configuring a scheduling gap for communication with the SN base station 130 by using a signaling bearer (SRB) (e.g., SRB3) configured for direct communication.

Referring to FIG. 3, in operation 210, the MUSIM UE 110 is in a state where a dual-connectivity (DC) connection has been established with the MN base station 120 and the SN base station 130 of network A. In operation 210, the MUSIM LTE 110 and the SN base station 130 may configure a signaling bearer (e.g., SRB3) enabling direct transmission or reception of a signal message (e.g., an RRC message).

If it is configured that the MUSIM UE 110 and the SN base station 130 may directly transmit or receive a signal message (e.g., an RRC message), the MUSIM UE 110 may transmit a message to the SN base station 130 in operation 310. The message may be transferred via radio resource control (RRC) signaling. In operation 310, the MUSIM UE 110 may transmit, to the SN base station 130, an RRC message (e.g., an SN UEAssistanceInformation message) including gap configuration assistance information (e.g., SNGapAssistance-Information) requested by the UE. The gap configuration assistance information (e.g., SNGapAssistance-Information) may include, for example, one or more pieces of the following information so as to be used.
Short-time network switching indication for periodic and/or one-shot
Preferred scheduling gap for periodic and/or one-shot

The scheduling gap includes, for example, a gap offset, a gap duration, and/or a gap period.

### DRX configuration assistance information (DRX assistance info)

The SN base station 130 may receive the RRC message. The SN base station 130 may receive the gap configuration assistance information (e.g., SNGapAssistance-Information) from the MUSIM UE 110. After receiving the gap configuration assistance information, the SN base station 130 may internally generate scheduling gap configuration information. The SN base station 130 may perform internal configuration.

In operation 315, the SN base station 130 may transmit an RRC message to the MUSIM UE 110. The SN base station 130 may transmit, to the MUSIM UE 110, the RRC message (e.g., SN RRCReconfiguration message) including the scheduling gap configuration information (e.g., SNSchedulingGapConfig). The scheduling gap configuration information (e.g., SNSchedulingGapConfig) may include, for example, one or more pieces of the following information so as to be used.
a gap offset, a gap duration and/or a gap period
RRM measurement gap configuration information

The MUSIM UE 110 may receive the RRC message including configuration information of the scheduling gap from the SN base station 130.

In operation 320, the MUSIM UE 110 may transmit a response message to the SN base station 130 via RRC signaling. The MUSIM UE 110 having received the scheduling gap configuration information (e.g., SNSchedulingGapConfig) from the SN base station 130 in operation 315 may transmit an RRC reconfiguration response message (e.g., an SN RRCReconfigurationComplete message) to the SN base station 130 in operation 320. In operation 391, the MUSIM LTE 110 may configure a scheduling gap operation according to information from the SN base station 130. Then, in operation 395, the MUSIM UE 110 may perform network switching.

When the RRC reconfiguration response message (e.g., the SN RRCReconfigurationComplete message) is received from the MUSIM LTE 110 in operation 320, the SN base station 130 may apply the scheduling gap according to the scheduling gap configuration information in operation 393. The SN base station 130 may perform transmission/reception according to the scheduling gap configuration information.

If it is configured that the MUSIM LTE 110 and the SN base station 130 may transmit or receive a signal message (e.g., an RRC message) via the MN base station 120, the MUSIM UE 110 may transmit a message to the MN base station 120 in operation 360. The message may be transferred via radio resource control (RRC) signaling. In operation 360, the MUSIM LTE 110 may add gap configuration assistance information (e.g., GapAssistance-Information), which is requested by the UE for the SN base station 130, to an RRC message (e.g., UEAssistanceInformation message) transmitted to the MN base station 130.

In operation 365, the MN base station 120 may transmit the gap configuration assistance information to the SN base station 130. When the MN base station 120 receives the gap configuration assistance information (e.g., SNGapAssistance-Information) for the SN base station 130 from the MUSIM UE 110, the MN base station 120 may transmit the message including the gap configuration assistance information to the SN base station 130 via an interface (e.g., an X2 interface or an Xn interface) between the MN base station 120 and the SN base station 130. The message may be, for example, an SN modification request message. The MN base station 120 transfers, to the SN base station 130, the gap configuration assistance information (e.g., SNGapAssistance-Information) for the SN base station 130. When the SN base station 130 receives the gap configuration assistance information (e.g., SNGapAssistance-Information) from the MUSIM UE 110 via the MN base station 120, scheduling gap configuration information may be generated internally.

In operation 370, the MN base station 120 may transmit a response message to the SN base station 130 via the interface (e.g., the X2 interface or Xn interface) between the MN base station 120 and the SN base station 130. The message may be, for example, an SN modification request acknowledge message. The SN base station 130 may transfer, using the message, an RRC reconfiguration message (e.g., an SN RRCReconfiguration message) of the SN base station to the MN base station 120. The RRC reconfiguration message (e.g., the SN RRCReconfiguration message) of the SN base station may include the scheduling gap configuration information (e.g., SNSchedulingGapConfig) to be transferred to the MUSIM UE 110. The MN base station 120 may receive the RRC reconfiguration message (e.g., the SN RRCReconfiguration message) of the SN base station from the SN base station 130.

In operation 375, the MN base station 120 may transmit the RRC reconfiguration message (e.g., the SN RRCReconfiguration message) of the SN base station to the MUSIM UE 110 by using an RRC reconfiguration message (e.g., an RRCReconfiguration message). The RRC reconfiguration message (e.g., the SN RRCReconfiguration message) of the SN base station may include the scheduling gap configuration information (e.g., SNSchedulingGapConfig). The MUSIM UE 110 may receive the scheduling gap configuration information (e.g., SNSchedulingGapConfig) from the SN base station 130.

In operation 380, the MUSIM UE 110 may transmit an RRC reconfiguration response message (e.g., an SN RRCReconfigurationComplete message) to the MN base station 120. In operation 391, the MUSIM LTE 110 may configure the scheduling gap operation according to information from the SN base station 130. Then, the MUSIM LTE 110 may perform network switching as in operation 395.

The MN base station 120 may receive the RRC reconfiguration response message (e.g., the RRCReconfigurationComplete message) from the MUSIM LTE 110 in operation 380. In operation 385, the MN base station 120 may transmit a message (e.g., an SN reconfiguration complete message), which indicates that RRC reconfiguration of the SN base station has been completed, to the SN base station 130 via the interface (e.g., the X2 interface or Xn interface) between the MN base station 120 and the SN base station 130.

In operation 385, when the SN base station 130 receives the message (e.g., the SN reconfiguration complete message) indicating that RRC reconfiguration of the SN base station has been completed, the SN base station 130 may apply the scheduling gap according to the scheduling gap configuration information. The SN base station 130 may perform transmission/reception according to the scheduling gap configuration information.

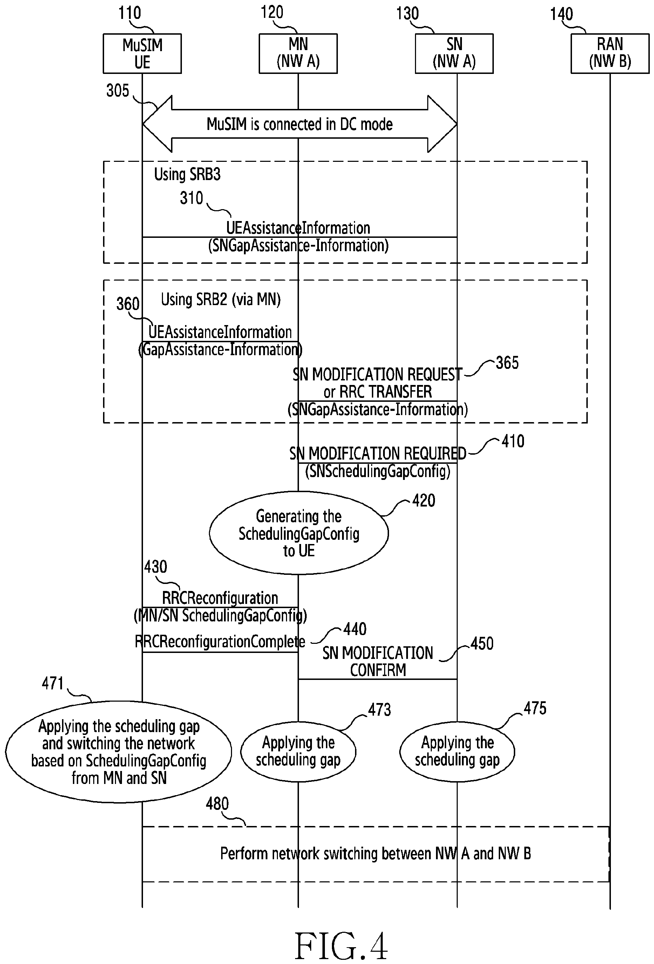

FIG. 4 illustrates an example of signaling for configuring a scheduling gap with an SN base station via an MN base station, for network switching to another network from one network connected by dual-connectivity (DC) according to embodiments of the disclosure.

Referring to FIG. 4, as in (a) of FIG. 1, the MUSIM LTE 110 may be connected to two networks, i.e., network A and network B. The MUSIM UE 110 may be connected to one network (network A in (a) of FIG. 1), wherein the base station 120 operating as a master node (MN) and the base station 130 operating as a secondary node (SN) are concurrently connected using dual-connectivity (DC). The MUSIM UE 110 may perform network switching to the base station 140 of another network (network B in (a) of FIG. 1). In an embodiment, the MUSIM UE 110 may temporarily perform network switching from network A to network B. The SN base station 130 of network A may configure a scheduling gap for temporarily suspending transmission or reception of the MUSIM UE 110. FIG. 4 illustrates a signal flow for describing a procedure for configuring a scheduling gap for the MUSIM LTE 110 to communicate with the MN base station 120 and/or communicate with the SN base station 130 via the MN base station 120.

Referring to FIG. 4, in operation 305, the MUSIM UE 110 is in a state where a dual-connectivity (DC) connection has been established with the MN base station 120 and the SN base station 130 of network A. In operation 305, the MUSIM LTE 110 and the SN base station 130 may configure a signaling bearer (e.g., SRB3) enabling direct transmission or reception of a signal message (e.g., an RRC message).

If it is configured that the MUSIM UE 110 and the SN base station 130 may directly transmit or receive a signal message (e.g., an RRC message), the MUSIM UE 110 may transmit a message to the SN base station 130 in operation 310. The message may be transferred via radio resource control (RRC) signaling. In operation 310, the MUSIM UE 110 may transmit, to the SN base station 130, an RRC message (e.g., an SN UEAssistanceInformation message) including gap configuration assistance information (e.g., SNGapAssistance-Information) requested by the UE. The gap configuration assistance information (e.g., SNGapAssistance-Information) may include, for example, one or more pieces of the following information so as to be used.
Short-time network switching indication for periodic and/or one-shot
Preferred scheduling gap for periodic and/or one-shot

The scheduling gap includes, for example, a gap offset, a gap duration, and/or a gap period.

### DRX configuration assistance information (DRX assistance info)

If it is configured that the MUSIM LTE 110 and the SN base station 130 may transmit or receive a signal message (e.g., an RRC message) via the MN base station 120, the MUSIM UE 110 may transmit a message to the MN base station 120 in operation 360. The message may be transferred via radio resource control (RRC) signaling. In operation 360, the MUSIM LTE 110 may add gap configuration assistance information (e.g., GapAssistance-Information), which is requested by the UE, to an RRC message (e.g., UEAssistanceInformation message) transmitted to the MN base station 130.

In operation 365, the MN base station 120 may transmit the gap configuration assistance information to the SN base station 130. When the MN base station 120 receives the gap configuration assistance information (e.g., GapAssistance-Information) for the SN base station from the MUSIM UE 110, the MN base station 120 may transmit the message including the gap configuration assistance information to the SN base station 130 via the interface (e.g., the X2 interface or Xn interface) between the MN base station 120 and the SN base station 130. For example, the message may be an SN modification request message. In addition, for example, the message may be an RRC TRANSFER message. The MN base station 120 may transfer, to the SN base station 130, gap configuration assistance information (e.g., SNGapAssistance-Information) for the SN base station 130 by using the above message.

When the SN base station 130 receives the gap configuration assistance information (e.g., SNGapAssistance-Information) for the SN base station directly from the MUSIM UE 110 in operation 310 or via the MN base station 120 in operation 365, the SN base station 130 may generate scheduling gap configuration information internally. After generating scheduling gap configuration information (e.g., SNSchedulingGapConfig) to be transferred to the MUSIM LTE 110 in addition to the internal configuration, the SN base station 130 may transmit a response message to the MN base station 120.

In operation 410, the SN base station 130 may perform transfer to the MN base station 120 by using a message (e.g., an SN modification required message) of the interface (e.g., the X2 interface or Xn interface) between the MN base station 120 and the SN base station 130. The MN base station 120 may receive the scheduling gap configuration information (e.g., SNSchedulingGapConfig) of the SN base station, which is generated by the SN base station 130, in operation 410.

In operation 420, the MN base station 120 may generate scheduling gap information. If there is generated scheduling gap configuration information (e.g., MN SchedulingGapConfig) of the MN base station, the MN base station 120 may generate scheduling gap configuration information (e.g., MN/SN SchedulingGapConfig) including the scheduling gap configuration information of the MN base station and/or the scheduling gap configuration information of the SN base station.

In operation 430, the MN base station 120 may transmit an RRC reconfiguration message (e.g., an RRCReconfiguration message) to the MUSIM UE 110. The RRC reconfiguration message may include the scheduling gap configuration information generated in operation 420. For example, the scheduling gap configuration information may include "MN/SN SchedulingGapConfig". The MUSIM UE 110 may receive the scheduling gap configuration information (e.g., MN/SN SchedulingGapConfig) from the MN base station 120.

In operation 440, the MUSIM UE 110 may transmit an RRC reconfiguration response message (e.g., an SN RRCReconfigurationComplete message) to the MN base station 120. The MUSIM UE 110 may configure the scheduling gap operation according to information from the MN base station 130 in operation 471. Accordingly, the MUSIM UE 110 may perform network switching as in operation 480. The scheduling gap configuration information (e.g., MN/SN SchedulingGapConfig) may include, for example, one or more pieces of the following information for each MN base station and/or SN base station (i.e., only the MN base station or only the SN base station, or both the MN base station and the SN base station) so as to be used.
a gap offset, a gap duration and/or a gap period
RRM measurement gap configuration information

The MN base station 120 may receive the RRC reconfiguration response message (e.g., the RRCReconfigurationComplete message) from the MUSIM LTE 110 in operation 440. In operation 450, the MN base station 120 may transmit, to the SN base station 130, a message of the interface (e.g., the X2 interface or Xn interface) between the MN base station 120 and the SN base station 130. The message may be, for example, an SN MODIFICATION CONFIRM message. In operation 473, the MN base station 120 may perform transmission/reception according to the scheduling gap configuration information.

According to operation 450, the SN base station 130 may receive a modification request confirmation message (e.g., the SN MODIFICATION CONFIRM message) of the SN base station from the MN base station 120 via the interface (e.g., the X2 interface or Xn interface) of the SN base station between the MN base station 120 and the SN base station 130. In operation 475, the SN base station 130 may perform transmission/reception according to the scheduling gap configuration information.

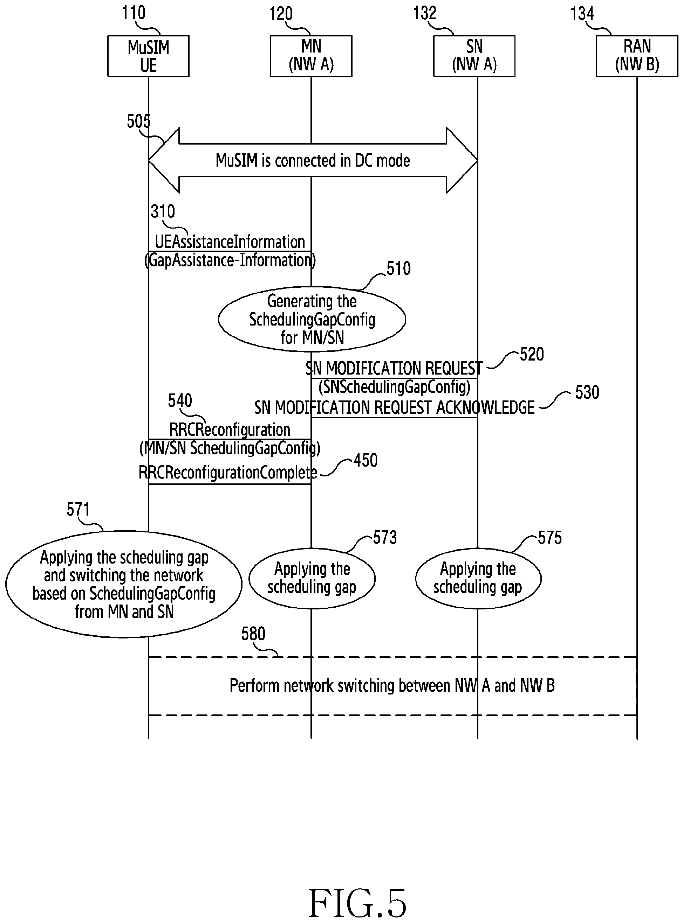

FIG. 5 illustrates an example of signaling for configuring a scheduling gap with an MN base station, for network switching to another network from one network connected by dual-connectivity (DC) according to embodiments of the disclosure. FIG. 5 illustrates a procedure for configuring a scheduling gap of the MN base station and a scheduling gap of the SN base station by the MN base station.

Referring to FIG. 5, as in (a) of FIG. 1, the MUSIM LTE 110 may be connected to two networks, i.e., network A and network B. The MUSIM UE 110 may be connected to one network (network A in (a) of FIG. 1), wherein the base station 120 operating as a master node (MN) and the base station 130 operating as a secondary node (SN) are concurrently connected using dual-connectivity (DC). The MUSIM UE 110 may perform network switching to the base station 140 of another network (network B in (a) of FIG. 1). In an embodiment, the MUSIM UE 110 may temporarily perform network switching from network A to network B. The SN base station 130 of network A may configure a scheduling gap for temporarily suspending transmission or reception of the MUSIM UE 110. FIG. 5 illustrates a signal flow for describing a procedure of the MN base station 120, in which the MN base station 120 and the SN base station 130 determine configuration of a scheduling gap with the MUSIM UE 110 so as to perform operations.

Referring to FIG. 5, in operation 505, the MUSIM UE 110 is in a state where a dual-connectivity (DC) connection has been established with the MN base station 120 and the SN base station 130 of network A.

If it is configured that the MUSIM LTE 110 and the SN base station 130 may transmit or receive a signal message (e.g., an RRC message) via the MN base station 120, the MUSIM UE 110 may transmit a message to the MN base station 130 in operation 310. The message may be transferred via radio resource control (RRC) signaling. In operation 310, the MUSIM UE 110 may transmit an RRC message (e.g., UEAssistanceInformation message) including gap configuration assistance information (e.g., GapAssistance-Information) requested by the UE, wherein the RRC message is to be transmitted to the MN base station 130. The gap configuration assistance information (e.g., GapAssistance-Information) may include, for example, one or more pieces of the following information so as to be used.
Short-time network switching indication for periodic and/or one-shot
Preferred scheduling gap for periodic and/or one-shot

The scheduling gap includes, for example, a gap offset, a gap duration, and/or a gap period.

### DRX configuration assistance information (DRX assistance info)

In operation 510, the MN base station 120 may configure a scheduling gap. The MN base station 120 may determine configuration of a scheduling gap for the MN base station and a scheduling gap for the SN base station by using the gap configuration assistance information (e.g., GapAssistance-Information) from the UE.

In operation 520, the MN base station 120 may transmit, to the SN base station 130, scheduling gap configuration information for the SN base station 130. The MN base station 120 may transfer, to the SN base station 130, the scheduling gap configuration information (e.g., SNSchedulingGapConfig) of the SN base station by using a message (e.g., an SN modification request message) of the interface (e.g., the X2 interface or Xn interface) between the MN base station 120 and the SN base station 130. The scheduling gap configuration information (e.g., SNSchedulingGapConfig) may include, for example, one or more pieces of the following information so as to be used.
a gap offset, a gap duration and/or a gap period
RRM measurement gap configuration information

In operation 520, the SN base station 130 may receive, from the MN base station 120, a modification request message (e.g., an SN modification request message) of the SN base station. In operation 530, the SN base station 130 may transmit, to the MN base station 120, a modification request response message (e.g., an SN modification request acknowledge message) of the SN base station.

In operation 540, the MN base station 120 may transmit, to the MUSIM UE 110, an RRC reconfiguration response message (e.g., an RRCReconfigurationComplete message) including scheduling gap configuration information of the MN base station and/or scheduling gap configuration information of the SN base station. The scheduling gap configuration information (e.g., MN/SN SchedulingGapConfig) may include, for example, one or more pieces of the following information for each MN base station and/or SN base station so as to be used.
a gap offset, a gap duration and/or a gap period
RRM measurement gap configuration information

In operation 540, the MUSIM LTE 110 may receive the scheduling gap configuration information (e.g., MN/SN SchedulingGapConfig) from the MN base station 120. The MUSIM UE 110 may transmit an RRC reconfiguration response message (e.g., an SN RRCReconfigurationComplete message) to the MN base station 120 in operation 550.

In operation 571, the MUSIM UE 110 may configure a scheduling gap. After configuration of the scheduling gap operation according to information from the MN base station 130, network switching may be performed accordingly as in operation 580.

In operation 573, the MN base station 120 may apply the scheduling gap according to the scheduling gap configuration information. The MN base station 120 may receive the RRC reconfiguration response message (e.g., the RRCReconfigurationComplete message) from the MUSIM UE 110 in operation 550. The MN base station 120 may perform transmission/reception according to the scheduling gap configuration information.

In operation 575, the SN base station 130 may apply the scheduling gap according to the scheduling gap configuration information. In operation 530, the SN base station 130 may transmit the SN base station modification request response message (e.g., the SN modification request acknowledge message) to the MN base station 120 via the interface (e.g., the X2 interface or Xn interface) between the MN base station 120 and the SN base station 130. The SN base station 130 may perform transmission/reception according to the scheduling gap configuration information.

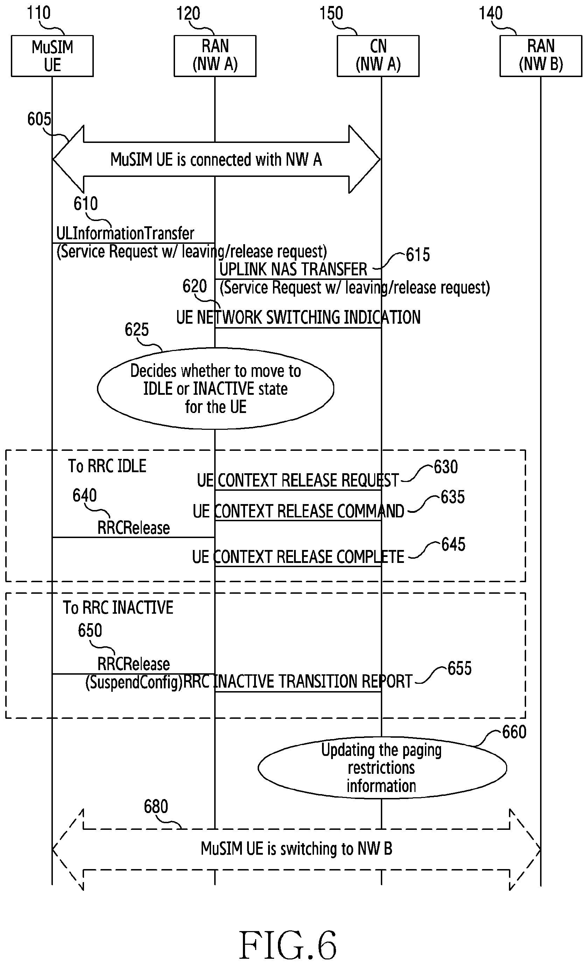

FIG. 6 illustrates an example of signaling for connection release by using a non-access stratum (NAS) message, for network switching according to embodiments of the disclosure. FIG. 6 illustrates a situation in which the MUSIM UE is connected to one network, and the UE transmits a connection release request to a core network by using a non-access stratum (NAS) message in order to perform network switching to another network. Via FIG. 6, a procedure in which a base station determines RRC state transition of the MUSIM UE and performs release is illustrated.

Referring to FIG. 6, as in (b) of FIG. 1, the MUSIM LTE 110 is connected to two networks, i.e., network A and network B, and one network (network A in (a) of FIG. 1) is connected. The MUSIM LTE 110 may perform network switching to the base station 140 of another network (network B in (a) of FIG. 1). In this embodiment, when the MUSIM UE 110 is disconnected from network A and performs network switching to network B, the MUSIM LTE 110 may use a non-access stratum (NAS) message. The LTE may transmit a connection release request for network A to the core network 150 of network A by using the non-access stratum (NAS) message. Then, the base station 120 of network A may determine a state of the MUSIM UE 110 to be transitioned from RRC connected to RRC idle or RRC inactive. FIG. 6 illustrates a signal flow for describing a procedure for performing the transition.

Referring to FIG. 6, in operation 605, the MUSIM UE 110 is connected to the base station 120 of network A. In operation 610, the MUSIM UE 110 may transmit an RRC message (e.g., a ULInformationTransfer message) including a NAS service request message to the base station 130 of network A. The NAS service request message transmitted in operation 610 may include information (e.g., leaving/release request indication) for requesting connection release from network A by the LTE. In operation 610, the base station 120 of network A may receive the NAS message from the MUSIM UE 110.

The base station 120 may transmit the NAS message received from the MUSIM UE 110 to the core network 150 of network A by using an interface (e.g., an S1 interface or NG interface) message (e.g., an uplink NAS transfer message) between the base station 120 and the core network 150. The core network 150 may be an EPC or a 5GC. According to an embodiment, the core network 150 may be 5GC. The base station 120 may transfer the NAS message received from the MUSIM LTE 110 to an access and mobility management function (AMF) via interface NG. According to an embodiment, the core network 150 may be an EPC. The base station 120 may transfer the NAS message received from the MUSIM LTE 110 to a mobility management entity (MME) via the S1 interface. That is, the entity of the core network 150 may receive a message and process the received message via the interface (e.g., the S1 interface or NG interface) between the base station 120 and the core network 150.

In operation 620, the core network 150 (i.e., MME or AMF which is the entity of the core network 150) of network A may transmit a message (e.g., UE network switching indication), which indicates that the UE has requested network switching (e.g., disconnecting from network A and connecting to network B), to the base station 120 of network A via the interface (e.g., the S1 interface or NG interface) message between the base station and the core network.

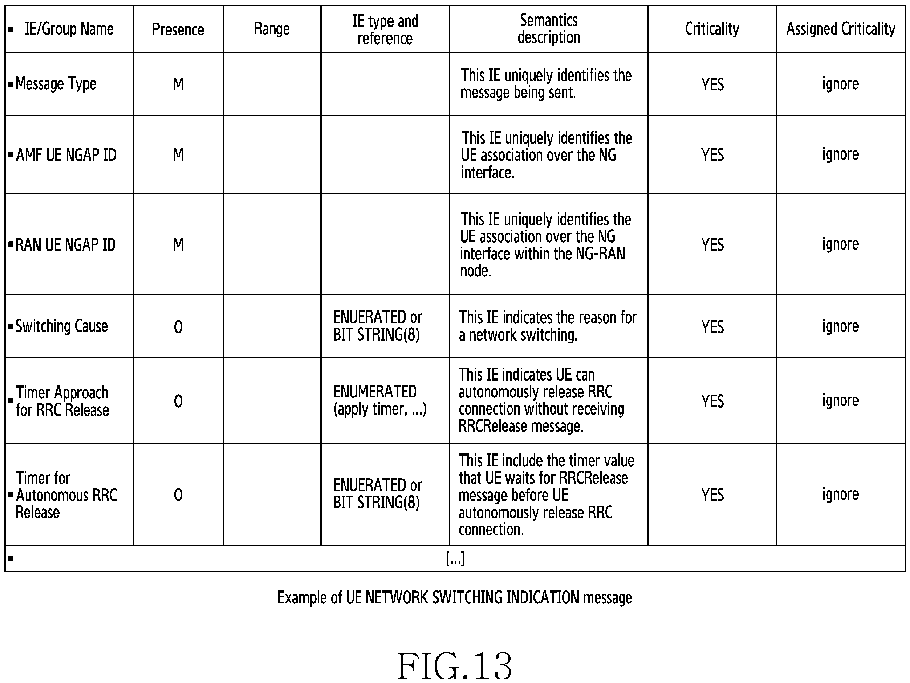

According to an embodiment, an example of a format included in the message (e.g., UE network switching indication), which is used in operation 620 and indicates that the UE has requested network switching (e.g., disconnecting from network A and connecting to network B) is as shown in FIG. 13. FIG. 13 illustrates a configuration example of the message (e.g., the UE network switching indication) which is transmitted to the base station from the core network and indicates that network switching has been requested. The format of FIG. 13 is as shown in Table 1.

**[Table 1]**

| **IE/Grou p Name** | **Presen ce** | **Rang e** | **IE type and reference** | **Semantics description** | **Critic ality** | **Assigne d Criticali** ty |
|---|---|---|---|---|---|---|
| Message Type | M | | | This IE uniquely identifies the message being sent. | YES | ignore |
| AMF UE NGAP ID | M | | | This IE uniquely identifies the LTE association over the NG interface. | YES | reject |
| RAN UE NGAP ID | M | | | This IE uniquely identifies the LTE association over the NG interface within the NG-RAN node. | YES | reject |
| Switchin g Cause | O | | ENUERA TED or BIT STRING( 8) | This IE indicates the reason for a network switching. | YES | ignore |
| Timer Approach for RRC Release | O | | ENUMER ATED (apply timer, ...) | This IE indicates UE can autonomously release RRC connection without receiving *RRCRelease* message. | YES | ignore |
| Timer for Autonom ous RRC Release | O | | ENUERA TED or BIT STRING( 8) | This IE include the timer value that UE waits for *RRCRelease* message before UE autonomously release RRC connection. | YES | ignore |
| [...] | | | | | | |

In Table 1, "M" refers to mandatory and "O" refers to optional. The message (e.g., UE network switching indication, hereinafter, a network switching indication message) indicating that network switching has been requested may include, in addition to a LTE AP ID (e.g., AMF UE NGAP ID and RAN UE NGAP ID) for distinguishing the UE in the interface between the base station and the core network, one or more pieces of information among cause (e.g., switching cause IE) information for the MUSIM LTE to perform network switching, indication information (e.g., timer approach for RRC release IE) of whether the MUSIM UE is to disconnect an RRC connection even without receiving an RRCRelease message from the base station, and a waiting time (e.g., timer for autonomous RRC release IE) for receiving an RRCRelease message when the MUSIM LTE disconnects an RRC connection even without receiving the RRCRelease message from the base station. The cause information for performing network switching may indicate a cause for performing network switching, and may include, for example, information enabling the LTE to indicate a voice call connection, an emergency call connection, a data connection, or the like.

In operation 530, the base station 120 of network A may determine whether to transition the RRC state of the UE. The base station 120 of network A, which has identified the request for network switching of the MUSIM LTE 110 from the entity (e.g., AMF or MME) of the core network 150 in operation 520, may determine in operation 530 whether to switch the RRC state of the MUSIM LTE 110 in network A from RRC connected to RRC idle or RRC inactive. Switching to RRC idle or RRC inactive may be determined according to a resource situation in the base station, a policy configured by a business operator, and the like.

In operation 520, the message (e.g., LTE network switching indication) indicating that the LTE has requested network switching may include a remaining timer value for automatic disconnection from the base station of network A and network switching even if the MUSIM UE 110 receives no RRCRelease message from the base station 120 of network A. The base station 120 of network A may determine a method of transmitting an RRC connection release message (e.g., an RRCRelease message) to the MUSIM UE 110 by using the remaining timer value for network switching. An example of determining the transmission method is as follows.
Lowering priority of transmitting the RRC connection release message (e.g., the RRCRelease message) to the MUSIM UE 110
Suspending transmission when transmission of the RRC connection release message (e.g., the RRCRelease message) to the MUSIM LTE 110 fails for a certain period of time or a certain number of times

If it is determined in operation 625 to switch the RRC state of the MUSIM LTE 110 to RRC idle, the base station 120 of network A may perform a procedure of switching to RRC idle from existing RRC connected. In operation 630, the base station 120 may transmit, to the core network 150, a message (e.g., a UE context release request message) to request release of the connection between the base station and the core network for the UE in the interface (e.g., the S1 interface or NG interface) between the base station and the core network. In operation 635, the entity of the core network 150 may transfer a connection release command message (e.g., a LTE context release command message) for the LTE, which is with respect to the base station and the core network. The base station 120 may receive a connection release request command message of the MUSIM UE 110. In operation 640, the base station 120 may transmit the RRC connection release message (e.g., the RRCRelease message) with respect to the MUSIM UE 110. In operation 645, the base station 120 may transmit a connection release completion message (e.g., a LTE context release complete message) to the entity (e.g., AMF or MME) of the core network 150.

In operation 645, the entity (e.g., AMF or MME) of the core network 150 may receive the connection release completion message (e.g., the UE context release complete message) from the base station 120. In operation 660, the entity (e.g., AMF or MME) of the core network 150 may update and store paging control information (e.g., paging restriction information) so as to prevent unnecessary paging from occurring in the MUSIM UE 110. In operation 680, the MUSIM LTE 110 may perform switching to the base station of network B. The MUSIM UE 110 having received the RRC connection release message (e.g., the RRCRelease message) from the base station 120 of network A in operation 640 may be connected to the base station of network B in operation 810.

If it is determined in operation 625 to switch the RRC state of the MUSIM LTE 110 to RRC inactive, the base station 120 may transmit, to the MUSIM UE 110 in operation 640, the RRC connection release message (e.g., the RRCRelease message) including information on transition to RRC inactive. In operation 655, the base station 120 may transmit, to the core network 150, a message (e.g., an RRC inactive transition report message) notifying that the MUSIM UE 110 has transitioned to RRC inactive. The entity (e.g., AMF or MME) of the core network 150 may receive, from the base station 120 in operation 655, the message (e.g., the RRC inactive transition report message) notifying that the transition to RRC inactive has been performed. In operation 660, in order to prevent unnecessary paging from occurring in the MUSIM UE 110, the entity (e.g., AMF or MME) of the core network 150 may update and store the paging control information (e.g., paging restriction information). In operation 680, the MUSIM UE 110 may perform switching to the base station of network B. The MUSIM UE 110 having received the RRC connection release message (e.g., the RRCRelease message) from the base station 120 of network A in operation 650 may be connected to the base station of network B.

In FIG. 6, it has been illustrated that, after the base station 120 transmits RRCRelease to the UE, the base station 120 transmits the message (e.g., UE context release complete in operation 645 or RRC inactive transition report in operation 655) to the entity of the core network 150, but embodiments of the disclosure are not limited to the sequence shown in FIG. 6. That is, the message (e.g., UE context release complete in operation 645 or RRC inactive transition report in operation 655) may be transmitted from the base station 120 to the entity of the core network 150 before RRCRelease is transmitted from the base station 120 to the UE.

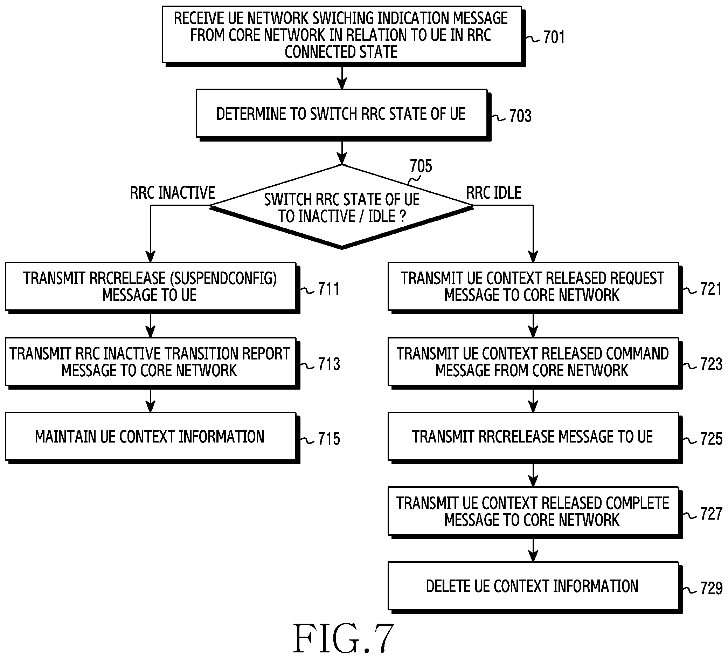

FIG. 7 illustrates an operation flow of a base station for RRC state transition during network switching according to embodiments of the disclosure.

FIG. 7 illustrates a situation in which the MUSIM UE 110 is connected to one network, and the UE transmits a connection release request to a core network by using a non-access stratum (NAS) message in order to perform network switching to another network. Descriptions are provided for operation procedures and messages for a base station to determine RRC state transition of a MUSIM LTE and perform state transition. According to an embodiment, the base station 120 of network A may receive, from an entity (e.g., AMF) of the core network 150, a request for RRC connection release from the MUSIM LTE 110 according to a request of the MUSIM LTE 110. The base station 120 may determine whether to switch an RRC state to an RRC idle or inactive state after releasing an RRC connection of the MUSIM LTE 110. Hereinafter, the operation procedures and messages in the base station 120 of network A are described.

Referring to FIG. 7, in operation 701, the base station 120 may receive a network switching indication message. In operation 701, the base station 120 of network A may receive, from the core network 150 of network A, a message (e.g., LTE network switching indication) indicating that the LTE has requested network switching (e.g., disconnecting from network A and connecting to network B).

In operation 703, the base station 120 may determine to switch the RRC state of the MUSIM UE 110 to RRC inactive or RRC idle. Switching to RRC idle or RRC inactive may be determined according to a resource situation in the base station, a policy configured by a business operator, and the like.

In operation 705, the base station 120 may determine whether to switch the RRC state of the MUSIM UE 110 to RRC inactive or to RRC idle. For switching of the RRC state of the MUSIM UE 110 to RRC inactive, the base station 120 may perform operation 711. For switching of the RRC state of the MUSIM LTE 110 to RRC idle, the base station 120 may perform operation 721. Although operation 703 and operation 705 are described as separate operations in FIG. 7, these illustrations are not interpreted as limiting the embodiment of the disclosure. That is, operation 703 and operation 705 may be performed as one operation. That is, according to an embodiment, whether to transition to RRC idle or RRC inactive may be determined according to a resource situation in the base station, a policy configured by a business operator, and the like.

If it is determined to switch the RRC state of the LTE to RRC inactive, the base station 120 may perform operation 711 to operation 715. In operation 711, the base station 120 may transmit an RRC release message (e.g., an RRCRelease message) to the LTE. The base station 120 may transmit an RRC release message for transitioning the UE to the RRC inactive state. For transition to the RRC inactive state, the RRC release message may include, for example, SuspendConfig information. In operation 713, the base station 120 may transmit, to the entity (e.g., AMF or MME) of the core network, a message (e.g., an RRC inactive transition report message) notifying that the MUSIM LTE 110 has transitioned to RRC inactive. In operation 715, the base station 120 may maintain LTE context information. That is, the base station 120 may manage the RRC inactive state of the MUSIM UE 110 by continuously maintaining the context information of the MUSIM UE 110.

If it is determined to switch the RRC state of the LTE to RRC idle, the base station 120 may perform operation 721 to operation 729. In operation 721, the base station may transfer, to the entity (e.g., AMF or MME) of the core network 150, a message (e.g., a UE context release request message) for the UE, which is for requesting release of the connection between the base station and the core network. In operation 723, the base station 120 may receive a connection release command message (e.g., a UE context release command message) for the UE, which is with respect to the base station and the core network, from the entity (e.g., AMF or MME) of the core network 150. In operation 725, the base station 120 may transmit, to the UE, an RRC release message (e.g., an RRCRelease message) for transitioning the UE to the RRC idle state. In operation 727, the base station may transmit a connection release completion message (e.g., a LTE context release complete message) to the entity (e.g., AMF or MME) of the core network 150. In addition, in operation 729, the base station 120 may delete LTE context information. That is, the base station 120 may delete the context information of the MUSIM UE 110 stored in the base station 120.

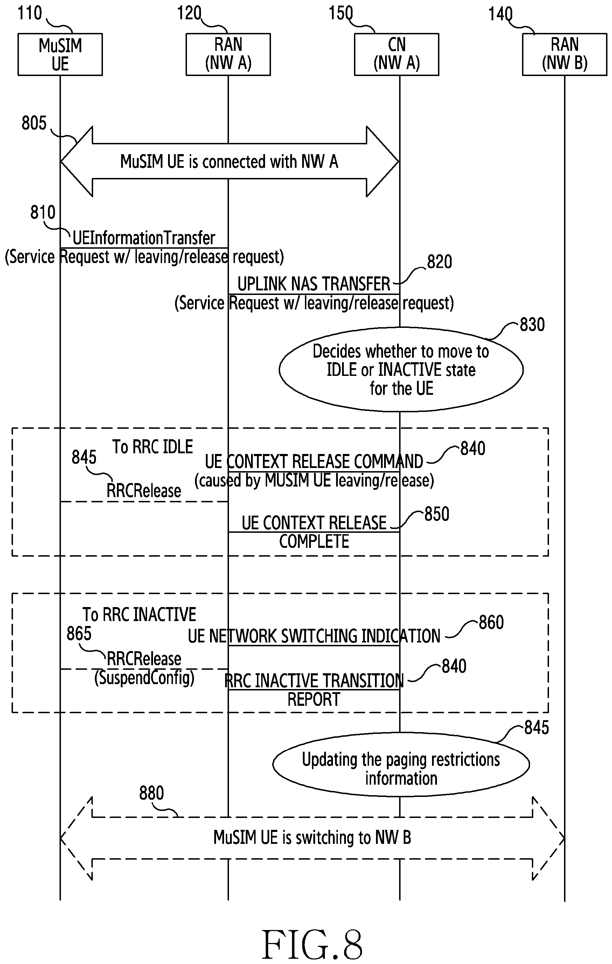

FIG. 8 illustrates an example of signaling for connection release by using a non-access stratum (NAS) message, for network switching according to embodiments of the disclosure. Description is provided for a situation in which a MUSIM UE is connected to one network, and the UE transmits a connection release request to a core network by using a non-access stratum (NAS) message in order to perform network switching to another network. Via FIG. 8, a procedure in which a core network determines an RRC state transition of a MUSIM LTE and performs release is illustrated.

Referring to FIG. 8, as in (b) of FIG. 1, the MUSIM LTE 110 is connected to two networks, i.e., network A and network B, and one network (network A (a) of FIG. 1) is connected. In an embodiment of network switching to the base station 140 of another network (network B in (a) of FIG. 1), the MUSIM LTE 110 may be disconnected from network A and perform network switching to network B. After the LTE transmits a request for connection release of network A to the core network 150 of network A by using a non-access stratum (NAS) message, transition of a state of the MUSIM UE 110 from RRC connected to RRC idle or RRC inactive may be determined in the core network 150 of network A. Then, description is provided for a procedure for performing a release procedure from the core network.

Referring to FIG. 8, in operation 805, the MUSIM UE 110 is connected to the base station 120 of network A. In operation 810, the MUSIM UE 110 transmits an RRC message (e.g., a ULInformationTransfer message) including a NAS service request message to the base station 130 of network A. The NAS service request message transmitted in operation 810 may include information (e.g., leaving/release request indication) for requesting connection release from network A by the UE. In operation 310, the base station 120 of network A may receive the NAS message from the MUSIM UE 110.

The base station 120 may transmit the NAS message received from the MUSIM UE 110 to the core network 150 of network A by using the interface (e.g., the S1 interface or NG interface) message (e.g., an uplink NAS transfer message) between the base station 120 and the core network 150. The core network 150 may be an EPC or a 5GC. According to an embodiment, the core network 150 may be 5GC. The base station 120 may transfer the NAS message received from the MUSIM LTE 110 to an access and mobility management function (AMF) via interface NG. According to an embodiment, the core network 150 may be an EPC. The base station 120 may transfer the NAS message received from the MUSIM LTE 110 to a mobility management entity (MME) via the S1 interface. That is, the entity of the core network 150 may receive a message and process the received message via the interface (e.g., the S1 interface or NG interface) between the base station 120 and the core network 150.

If the NAS service request message includes information (e.g., leaving/release request indication) for requesting connection release from network A by the UE, the entity (e.g., AMF or MME) of the core network 150 of network A may determine whether to switch the RRC state of the MUSIM UE 110 in network A from RRC connected to RRC idle or RRC inactive. Switching to RRC idle or RRC inactive may be determined according to resource situations in the base station and the network, a policy configured by a business operator, and the like.

If it is determined to switch the RRC state of the MUSIM UE 110 to RRC idle, the entity (e.g., AMF or MME) of the core network 150 may transfer, in operation 840, a connection release command message (e.g., a UE context release command message) for the UE, which is with respect to the base station and the core network, to the base station 120. The connection release command message (e.g., the UE context release command message) with respect to the base station and the core network, the message being used in operation 840, may include a remaining timer value for automatic disconnection from the base station of network A and network switching even if the MUSIM UE 110 receives no RRCRelease message from the base station 120 of network A. The base station 120 of network A may determine a method of transmitting an RRC connection release message (e.g., an RRCRelease message) to the MUSIM LTE 110 by using the remaining timer value for network switching. An example of determining the transmission method is as follows.
Lowering priority of transmitting the RRC connection release message (e.g., the RRCRelease message) to the MUSIM UE 110
Suspending transmission when transmission of the RRC connection release message (e.g., the RRCRelease message) to the MUSIM LTE 110 fails for a certain period of time or a certain number of times

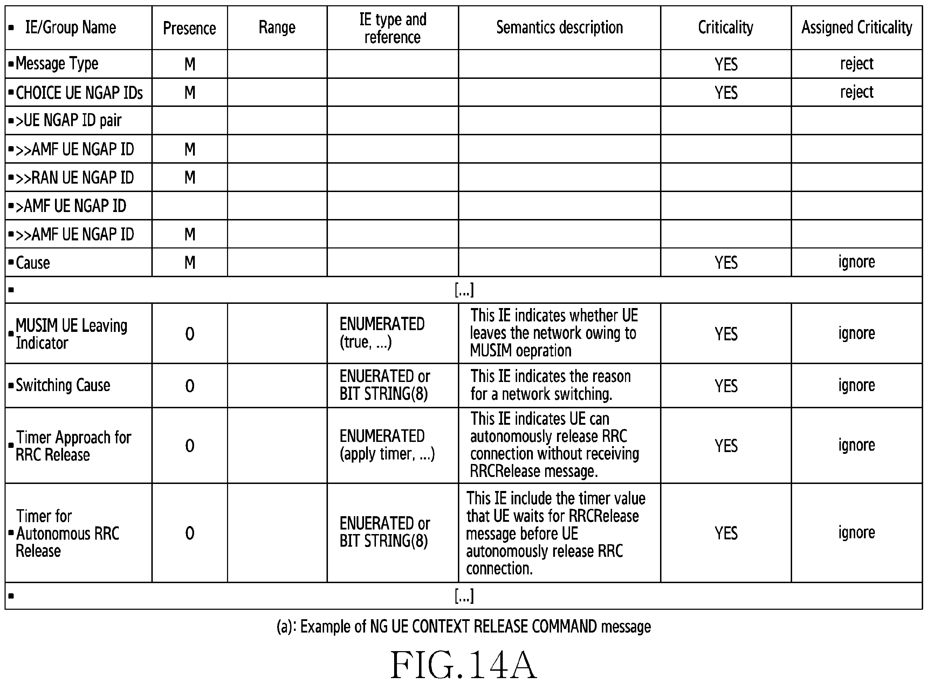

In an embodiment, an example of a format included in the connection release command message (e.g., the UE context release command message) with respect to the base station and the core network, the message being used in operation 840, is as shown in FIG. 14A. FIG. 14A illustrates a configuration example of the connection release command message (e.g., the LTE context release command message) for the LTE, which is with respect to the base station and the core network and is transmitted from the core network to the base station in order to support network switching of the MUSIM UE. The format of FIG. 14(A) is as shown in Table 2.

**[Table 2]**

| **IE/Group Name** | **Presen ce** | **Rang e** | **IE type and reference** | **Semantics description** | **Critic ality** | **Assign ed Critica lity** |
|---|---|---|---|---|---|---|
| Message Type | M | | | | YES | reject |
| CHOICE UE NGAP IDs | M | | | | YES | reject |
| >UE NGAP ID pair | | | | | | |
| >>AMF UE NGAP ID | M | | | | - | |
| >>RAN UE NGAP ID | M | | | | - | |
| >AMF UE NGAP ID | | | | | | |
| >>AMF UE NGAP ID | M | | | | - | |
| Cause | M | | | | YES | ignore |
| [...] | | | | | | |
| MUSIM UE Leaving Indicator | O | | ENUMER ATED (true, ...) | This IE indicates whether UE leaves the network owing to MUSIM operation | YES | ignore |
| Switching Cause | O | | ENUERAT ED or BIT STRING(8) | This IE indicates the reason for a network switching. | YES | ignore |
| Timer Approach for RRC Release | O | | ENUMER ATED (apply timer, ...) | This IE indicates UE can autonomousl y release RRC connection without receiving RRCRelease message. | YES | ignore |
| Timer for Autonomous RRC Release | O | | ENUERAT ED or BIT STRING(8) | This IE include the timer value that UE waits for RRCRelease message before UE autonomousl y release RRC connection. | YES | ignore |
| [...] | | | | | | |

In Table 2, "M" refers to mandatory and "O" refers to optional.

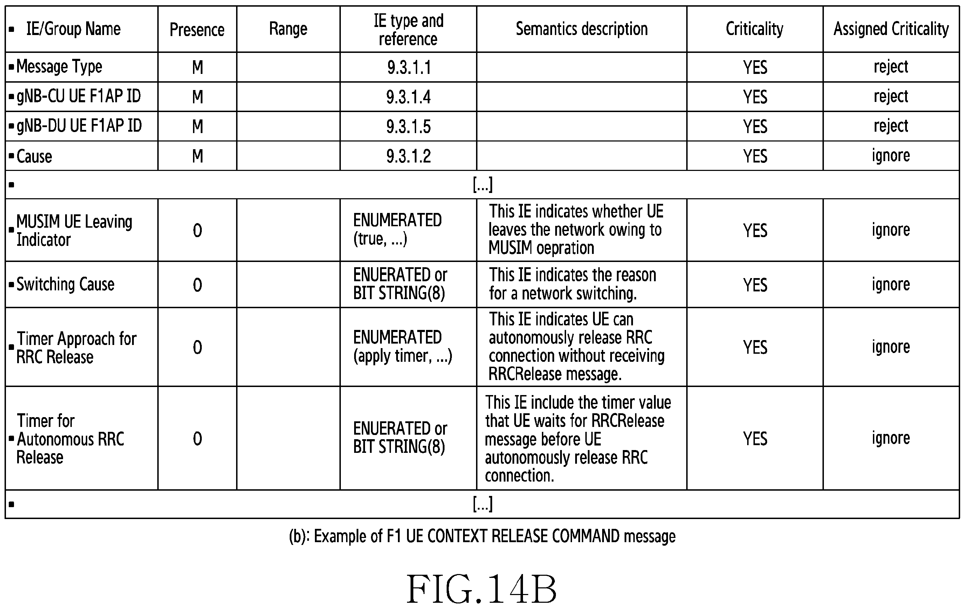

The base station 120 may be implemented in a distributed arrangement configured by CU-DU as shown in FIG. 2. In this case, a CU may transmit a message to a DU via interface F1. FIG. 14B illustrates a configuration example of the connection release command message (e.g., the UE context release command message) for the UE, which is transmitted to the DU from the CU in the base station.

The connection release command message (e.g., the UE context release command message) with respect to the base station and the core network may, in addition to a LTE AP ID (e.g., AMF UE NGAP ID and RAN UE NGAP ID) for distinguishing the UE in the interface between the base station and the core network, indicate, in an existing cause IE (e.g., MUSIM UE leaving/release cause), that the connection release command message (e.g., the UE context release command message) for the UE, which is with respect to the base station and the core network, has been transmitted from the core network in response to the connection release request of the MUSIM UE, or may separately include an IE (e.g., a MUSIM UE leaving indication IE) indicating that the connection release request has been made by the MUSIM UE. The message may include one or more pieces of information among cause (e.g., switching cause IE) information for the MUSIM UE to perform network switching, indication information (e.g., timer approach for RRC release IE) of whether the MUSIM UE is to disconnect an RRC connection even without receiving an RRCRelease message from the base station, and a waiting time (e.g., timer for autonomous RRC release IE) for receiving an RRCRelease message when the MUSIM UE disconnects an RRC connection even without receiving the RRCRelease message from the base station. The cause information for performing network switching may indicate a cause for performing network switching, and may include, for example, information enabling the LTE to indicate a voice call connection, an emergency call connection, a data connection, or the like.

In operation 840, the base station 120 may receive a connection release request command message (e.g., the UE context release command message) of the MUSIM UE 110. The base station 120 may transmit the RRC connection release message (e.g., the RRCRelease message) with respect to the MUSIM UE 110, in operation 845. In operation 850, the base station 120 may transmit a connection release completion message (e.g., a UE context release complete message) to the entity (e.g., AMF or MME) of the core network 150. The MUSIM UE 110 having received the RRC connection release message (e.g., the RRCRelease message) from the base station 120 of network A in operation 845 may be connected to the base station of network B in operation 880.

If it is determined to switch the RRC state of the MUSIM UE 110 to RRC inactive, the entity (e.g., AMF or MME) of the core network 150 may transmit a network switching indication message, in operation 860. The entity (e.g., AMF or MME) of the core network 150 may transmit, to the base station 120 in operation 860, a message (e.g., UE network switching indication) indicating that the UE has requested network switching (e.g., disconnecting from network A and connecting to network B). In an embodiment, an example of a format included in the message (e.g., UE network switching indication) which is used in operation 860 and indicates that the UE has requested network switching (e.g., disconnecting from network A and connecting to network B) is as shown in FIG. 13 (or Table 1). The message (e.g., UE network switching indication), which is used in operation 810 and indicates that the LTE has requested network switching, may include a remaining timer value for automatic disconnection from the base station of network A and network switching even if the MUSIM UE 110 receives no RRCRelease message from the base station 120 of network A. The base station 120 of network A may determine a method of transmitting an RRC connection release message (e.g., an RRCRelease message) to the MUSIM UE 110 by using the remaining timer value for network switching. An example of determining the transmission method is as follows.
Lowering priority of transmitting the RRC connection release message (e.g., the RRCRelease message) to the MUSIM UE 110
Suspending transmission when transmission of the RRC connection release message (e.g., the RRCRelease message) to the MUSIM LTE 110 fails for a certain period of time or a certain number of times

The base station 120 of network A having identified the request for network switching of the MUSIM UE 110 from the core network 150 in operation 860 may transmit, to the MUSIM UE 110 in operation 865, the RRC connection release message (e.g., the RRCRelease message) including RRC inactive transition information. In operation 870, a message (e.g., an RRC inactive transition report message) notifying that the MUSIM UE 110 has transitioned to RRC inactive may be transmitted to the core network 150. The MUSIM UE 110 having received the RRC connection release message (e.g., the RRCRelease message) from the base station 120 of network A may be connected to the base station of network B in operation 880.

The entity (e.g., AMF or MME) of the core network 150 may receive the connection release request completion message (e.g., the UE context release complete message) transmitted from the base station 120 in operation 850, or may receive, from the base station 120 in operation 870, the message (e.g., the RRC inactive transition report message) notifying that the transition to RRC inactive has been performed. The entity (e.g., AMF or MME) of the core network 150 may update and store, in operation 875, paging control information (e.g., paging restriction information) so as to prevent unnecessary paging from occurring in the MUSIM UE 110.

In FIG. 8, it has been illustrated that, after the base station 120 transmits RRCRelease to the UE, the base station 120 transmits the message (e.g., UE context release complete in operation 850 or RRC inactive transition report in operation 870) to the entity of the core network 150, but embodiments of the disclosure are not limited to the sequence shown in FIG. 6. That is, the message (e.g., UE context release complete in operation 850 or RRC inactive transition report in operation 870) may be transmitted from the base station 120 to the entity of the core network 150 before RRCRelease is transmitted from the base station 120 to the UE.

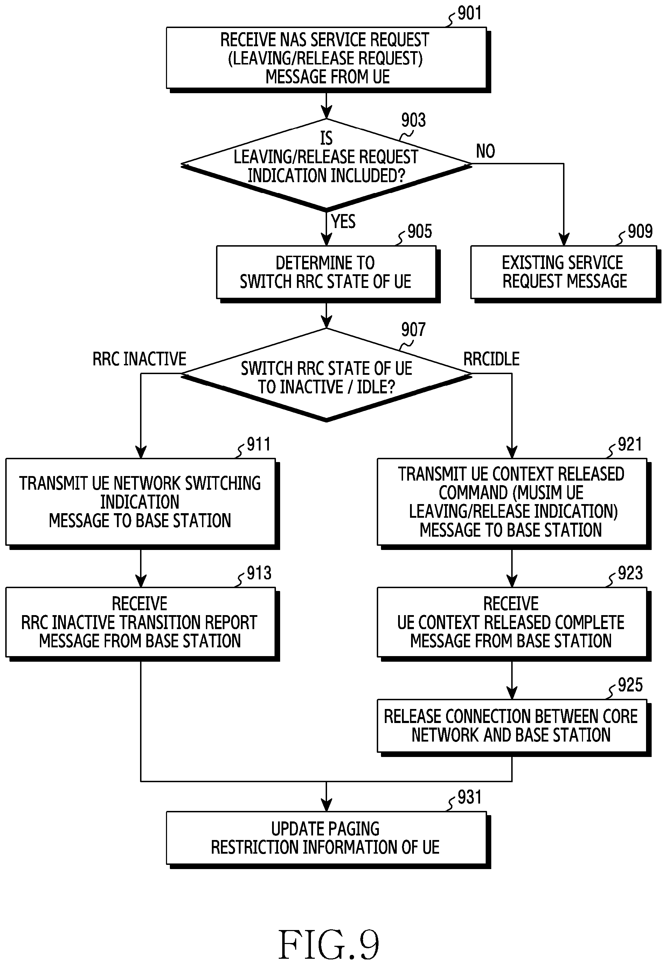

FIG. 9 illustrates an operation flow of a core network entity for RRC state transition, during network switching according to embodiments of the disclosure. In FIG. 9, an AMF is illustrated as a core network entity, but an EPC MME as well as the AMF may perform operations which will be described later. Description is provided for a situation in which MUSIM is connected to one network, and the LTE transmits a connection release request to a core network by using a non-access stratum (NAS) message in order to perform network switching to another network. Descriptions are provided for operation procedures and messages for the core network to determine RRC state transition of the MUSIM LTE and perform state transition. According to an embodiment, when an RRC connection to the MUSIM UE 110 is released in response to a request of the MUSIM LTE 110, the core network 150 of network A may determine whether to release the RRC connection of the MUSIM UE 110 and then switch the RRC state to the RRC idle or inactive state. A message from an AMF or MME as the entity of the core network 150 to the base station 120 (gNB or eNB as NG RAN node) of network A and an operating procedure in the core network 150 are described.

Referring to FIG. 9, in operation 901, a core network entity may receive a service request message via NAS signaling. The core network entity may receive a NAS service request message from the MUSIM UE 110. In operation 903, the core network entity may identify whether the NAS service request message includes information (e.g., leaving/release request indication) for requesting connection release from network A by the UE. If the information for requesting connection release is included in the NAS service request message, the core network entity may perform operation 905. If the information for requesting connection release is not included in the NAS service request message, the core network entity may perform operation 909.

In operation 905, the core network entity may determine to switch the RRC state of the MUSIM UE 110 to RRC inactive or RRC idle. If the NAS service request message includes the information (e.g., leaving/release request indication) for requesting the UE to be disconnected from network A, the core network entity determines whether to switch the RRC state of the MUSIM LTE 110 to RRC inactive or RRC idle. Switching to RRC idle or RRC inactive may be determined according to a resource situation in the base station, a policy configured by a business operator, and the like. In operation 907, the core network entity may determine whether to switch the RRC state of the MUSIM LTE 110 to RRC inactive or to RRC idle.

For switching of the RRC state of the MUSIM UE 110 to RRC inactive, the core network entity may perform operation 911. For switching of the RRC state of the MUSIM LTE 110 to RRC idle, the core network entity may perform operation 921. Although operation 905 and operation 907 are described as separate operations in FIG. 9, these illustrations are not interpreted as limiting the embodiment of the disclosure. That is, operation 905 and operation 907 may be performed as one operation. That is, according to an embodiment, whether to transition to RRC idle or RRC inactive may be determined according to a resource situation in the base station, a policy configured by a business operator, and the like.

In operation 909, the core network entity may perform a processing procedure of a case when an existing NAS service request message is received. That is, an operation according to another service request may be performed for the NAS service request message.

If it is determined to switch the RRC state of the UE to RRC inactive, the core network entity may perform operation 911 to operation 913. In operation 911, in order to request, from the base station 120, transition of the UE to the RRC inactive state, the core network entity may transmit, to the base station 120, a message (e.g., LTE network switching indication) indicating that the LTE has requested network switching (e.g., disconnecting from network A and connecting to network B). In addition, in operation 913, the core network entity may receive, from the base station 120, a message (e.g., an RRC inactive transition report message) notifying that the MUSIM UE 110 has transitioned to RRC inactive. Then, in operation 931, the core network entity may update and store paging control information (e.g., paging restriction information) so as to prevent unnecessary paging from occurring in the MUSIM UE 110.

If it is determined to switch the RRC state of the LTE to RRC idle, the core network entity may perform operation 921 to operation 925. In operation 921, in order to request, from the base station 120, transition of the UE to the RRC idle state, the core network entity may transfer, to the base station 120, a connection release command message (e.g., a UE context release command message) for the UE, which is with respect to the base station and the core network. In operation 923, the core network entity may receive a connection release completion message (e.g., a LTE context release complete message) from the base station 120. In operation 925, the core network entity may release connection information for the UE, the connection being made between the core network and the base station. Then, in operation 931, the core network entity may update and store paging control information (e.g., paging restriction information) so as to prevent unnecessary paging from occurring in the MUSIM UE 110.

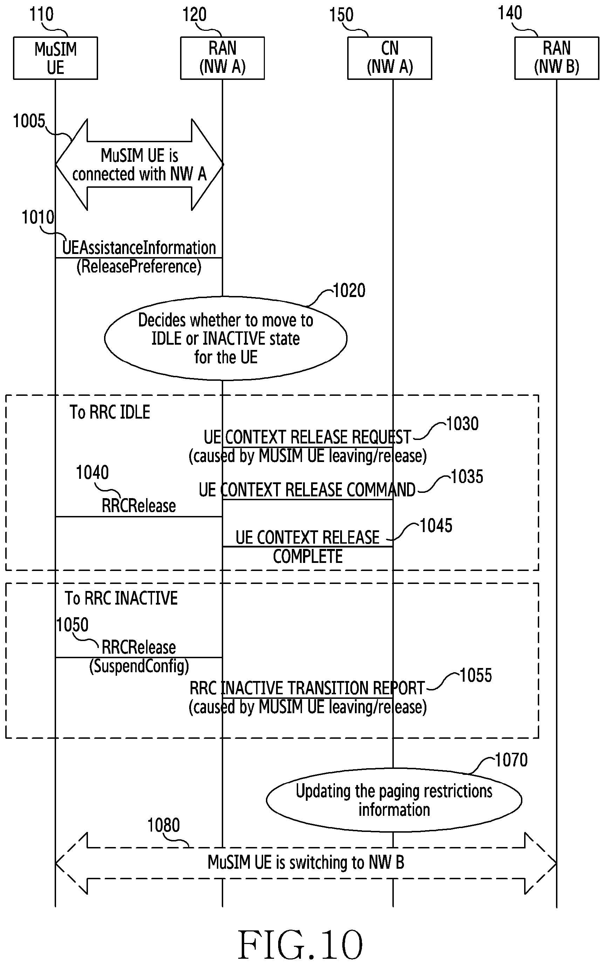

FIG. 10 illustrates an example of signaling for connection release by using a non-access stratum (NAS) message, for network switching according to embodiments of the disclosure. Description is provided for a situation in which a MUSIM UE is connected to one network, and the LTE transmits a connection release request to a base station by using an RRC message in order to perform network switching to another network. A procedure in which the base station determines and performs RRC state transition of the MUSIM UE is illustrated.

Referring to FIG. 10, as in (b) of FIG. 1, the MUSIM LTE 110 is connected to two networks, i.e., network A and network B, and one network (network A in (a) of FIG. 1) is connected. In an embodiment in which the LTE performs network switching to the base station 140 of another network (network B in (a) of FIG. 1), the MUSIM UE 110 may be disconnected from network A and perform network switching to network B. Description is provided for a procedure in which, when the UE transmits, using an RRC message, a request for releasing the connection to network A to the core network 150 of network A, the base station 120 of network A determines and performs transition of the state of the MUSIM UE 110 from RRC connected to RRC idle or RRC inactive.

Referring to FIG. 10, in operation 1005, the MUSIM UE 110 is connected to the base station 120 of network A. In operation 1010, the MUSIM UE 110 may transmit, to the base station 120 of network A, an RRC message (e.g., a UEAssistanceInformation message) including information (e.g., ReleasePreference) for requesting connection release from network A. The base station 120 may receive, from the MUSIM UE 110, the information (e.g., ReleasePreference) for requesting connection release. In operation 1020, the base station may determine whether to switch the RRC state of the MUSIM UE 110 in network A from RRC connected to RRC inactive or RRC idle. Switching to RRC idle or RRC inactive may be determined according to a resource situation in the base station, a policy configured by a business operator, and the like.

If it is determined to switch the RRC state of the MUSIM UE 110 to RRC idle, the base station 120 of network A may transfer, to the core network 150, a message (e.g., a UE context release request message) for the LTE, which is for requesting release of the connection between the base station and the core network in the interface (e.g., the S1 interface or NG interface) between the base station and the core network, in operation 1030 as in the switching from the existing RRC connected to RRC idle.

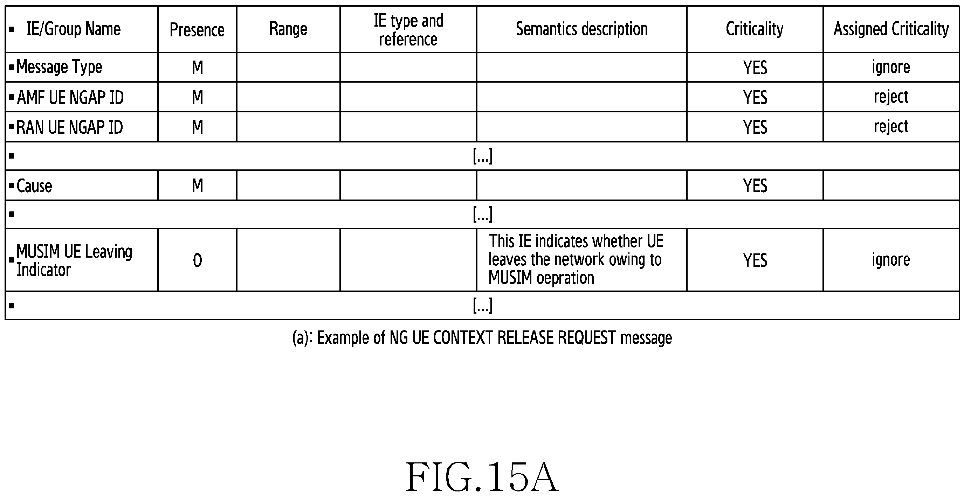

The message (e.g., the UE context release request message) for requesting connection release, which is transmitted in operation 1030, may include information (e.g., UE leaving/release cause or indication) indicating that the procedure is performed in response to the MUSIM LTE requesting the connection release. In an embodiment, an example of a format included in the connection release request message (e.g., the LTE context release command message) with respect to the base station and the core network, the message being used in operation 1030, is as shown in FIG. 15A. FIG. 15A illustrates a configuration example of the connection release request message (e.g., the UE context release request message) for the UE, which is with respect to the base station and the core network and is transmitted from the base station to the core network in order to support network switching of the MUSIM UE. The format of FIG. 15A is as shown in Table 3.

**[Table 3]**

| **IE/Group Name** | **Presen ce** | **Rang e** | **IE type and referenc e** | **Semantics description** | **Critic ality** | **Assigned Criticality** |
|---|---|---|---|---|---|---|
| Message Type | M | | | | YES | ignore |
| AMF UE NGAP ID | M | | | | YES | reject |
| RAN UE NGAP ID | M | | | | YES | reject |
| [...] | | | | | | |
| Cause | M | | | | YES | ignore |
| [...] | | | | | | |
| MUSIM UE Leaving Indicator | O | | ENUME RATED (true, ...) | This IE indicates whether UE leaves the network owing to MUSIM operation | YES | ignore |
| [...] | | | | | | |

In Table 3, "M" refers to mandatory and "O" refers to optional.

The connection release request message (e.g., the UE context release request message) with respect to the base station and the core network may, in addition to a UE AP ID (e.g., AMF UE NGAP ID and RAN UE NGAP ID) for distinguishing the UE in the interface between the base station and the core network, indicate, in an existing cause IE (e.g., MUSIM UE leaving/release cause), that the connection release request message (e.g., the UE context release request message) for the LTE, which is with respect to the base station and the core network, has been transmitted from the core network in response to the connection release request of the MUSIM UE, or may separately include an IE (e.g., a MUSIM UE leaving indication IE) indicating that the connection release request has been made by the MUSIM UE.

In operation 1035, the entity (e.g., AMF or MME) of the core network 150 may transfer, to the base station, the connection release command message (e.g., the UE context release command message) for the LTE with respect to the base station and the core network. The base station 120 may receive, in operation 1035, the connection release request command message of the MUSIM LTE 110. The base station 120 may transmit the RRC connection release message (e.g., the RRCRelease message) with respect to the MUSIM UE 110, in operation 1040. In operation 1045, the base station 120 may transmit a connection release completion message (e.g., a UE context release complete message) to the entity of the core network 150. The MUSIM UE 110 having received the RRC connection release message (e.g., the RRCRelease message) from the base station 120 of network A in operation 1040 may be connected to the base station of network B in operation 1080.

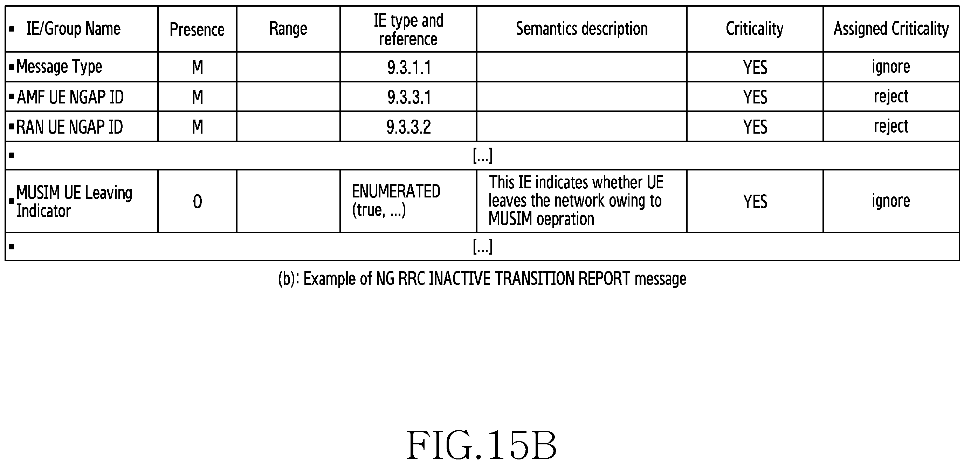

If it is determined to switch the RRC state of the MUSIM UE 110 to RRC inactive, the base station 120 may transmit, to the MUSIM UE 110 in operation 1050, the RRC connection release message (e.g., the RRCRelease message) including information on transition to RRC inactive. In operation 1055, the base station 120 may transmit, to the core network 150, a message (e.g., an RRC inactive transition report message) notifying that the MUSIM UE 110 has transitioned to RRC inactive. The message (e.g., the RRC inactive transition report message), which is transmitted in operation 1055 and notifies that transition has been performed to RRC inactive, may include information (e.g., LTE leaving/release cause or indication) indicating that the procedure is performed in response to the MUSIM UE requesting the connection release. In an embodiment, an example of a format included in the message (e.g., the RRC inactive transition report message) indicating that the LTE has transitioned to RRC inactive, the message being used in operation 1055, is as shown in FIG. 15B. FIG. 15B illustrates a configuration example of the message (e.g., the RRC inactive transition report message) which indicates that the LTE has transitioned to RRC inactive, and is transmitted from the base station to the core network in order to support network switching of the MUSIM UE. The format of FIG. 15(B) is as shown in Table 4.

**[Table 4]**

| **IE/Group Name** | **Presen ce** | **Rang e** | **IE type and referenc e** | **Semantics description** | **Critic ality** | **Assigned Criticality** |
|---|---|---|---|---|---|---|
| Message Type | M | | 9.3.1.1 | | YES | ignore |
| AMF UE NGAP ID | M | | 9.3.3.1 | | YES | reject |
| RAN UE NGAP ID | M | | 9.3.3.2 | | YES | reject |
| [...] | | | | | | |
| MUSIM UE Leaving Indicator | O | | ENUME RATED (true, ...) | This IE indicates whether UE leaves the network owing to MUSIM operation | YES | ignore |
| [...] | | | | | | |

In Table 4, "M" refers to mandatory and "O" refers to optional.

The message (e.g., the RRC inactive transition report message) indicating that the UE has transitioned to RRC inactive may separately include an IE (e.g., a MUSIM UE leaving indication IE) indicating that the connection release request has been made by the MUSIM UE, in addition to a LTE AP ID (e.g., AMF LTE NGAP ID and RAN LTE NGAP ID) for distinguishing the LTE in the interface between the base station and the core network. Via this, the base station 120 may notify the core network 150 that the UE has transitioned to RRC inactive in response to the connection release request made by the MUSIM UE.

In operation 1070, the entity (e.g., AMF or MME) of the core network 150 may update paging control information. If the message (e.g., the LTE context release request message) for requesting connection release, which is transmitted by the base station 120 in operation 1030, or the message (e.g., the RRC inactive transition report message) which is transmitted by the base station 120 in operation 1055 and notifies that transition has been performed to RRC inactive include information (e.g., UE leaving/release cause or indication) indicating that the procedure is performed in response to the MUSIM UE requesting the connection release, the entity (e.g., AMF or MME) of the core network 150 may update and store paging control information (e.g., paging restriction information) so as to prevent unnecessary paging from occurring in the MUSIM UE 110.

In FIG. 10, it has been illustrated that, after the base station 120 transmits RRCRelease to the UE, the base station 120 transmits the message (e.g., UE context release complete in operation 1045 or RRC inactive transition report in operation 1070) to the entity of the core network 150, but embodiments of the disclosure are not limited to the sequence shown in FIG. 6. That is, the message (e.g., UE context release complete in operation 1045 or RRC inactive transition report in operation 1070 may be transmitted from the base station 120 to the entity of the core network 150 before RRCRelease is transmitted from the base station 120 to the UE.

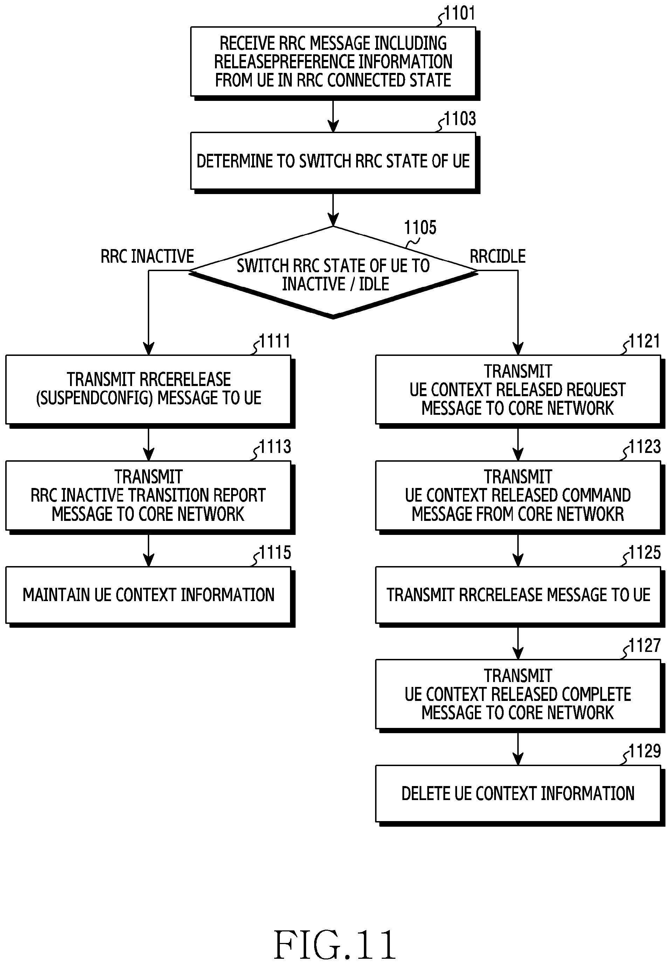

FIG. 11 illustrates an operation flow of a core network entity for RRC state transition, during network switching according to embodiments of the disclosure. FIG. 11 illustrates operation procedures and messages for performing of a procedure in which, when MUSIM is connected to one network, and the LTE transmits a connection release request to a base station by using an RRC message in order to perform network switching to another network, the base station determines and performs RRC state transition of the MUSIM LTE. According to an embodiment, when an RRC connection release request with respect to the MUSIM UE 110 is received in response to a request of the MUSIM LTE 110, the base station 120 of network A may determine whether to release the RRC connection of the MUSIM UE 110 and then switch the RRC state to the RRC idle or inactive state. The operation procedures and messages in the base station 120 of network A are described.

Referring to FIG. 11, in operation 1101, the base station 120 of network A may receive information (e.g., ReleasePreference) for requesting connection release via an RRC message from the MUSIM UE 110.

In operation 1103, the base station 120 may determine to switch the RRC state of the MUSIM UE 110 to RRC inactive or RRC idle. Switching to RRC idle or RRC inactive may be determined according to a resource situation in the base station, a policy configured by a business operator, and the like.

In operation 1105, the base station 120 may determine whether to switch the RRC state of the MUSIM UE 110 to RRC inactive or to RRC idle. For switching of the RRC state of the MUSIM UE 110 to RRC inactive, the base station 120 may perform operation 1111. For switching of the RRC state of the MUSIM LTE 110 to RRC idle, the base station 120 may perform operation 1121. Although operation 1103 and operation 1105 are described as separate operations in FIG. 7, these illustrations are not interpreted as limiting the embodiment of the disclosure. That is, operation 1103 and operation 1105 may be performed as one operation. That is, according to an embodiment, whether to transition to RRC idle or RRC inactive may be determined according to a resource situation in the base station, a policy configured by a business operator, and the like.

If it is determined to switch the RRC state of the LTE to RRC inactive, the base station 120 may perform operation 1111 to operation 1115. In operation 1111, the base station 120 may transmit, to the UE, an RRC release message (e.g., an RRCRelease message including SuspendConfig information) for transitioning the LTE to the RRC inactive state. In operation 1113, the base station 120 may transmit, to the core network, a message (e.g., an RRC inactive transition report message) notifying that the MUSIM UE 110 has transitioned to RRC inactive. In addition, in operation 1115, the base station 120 may maintain LTE context information. That is, the base station 120 may manage the RRC inactive state of the MUSIM UE 110 by continuously maintaining the context information of the MUSIM UE 110.

If it is determined to switch the RRC state of the LTE to RRC idle, the base station 120 may perform operation 1121 to operation 1129. In operation 1121, the base station 120 may transfer a message (e.g., a LTE context release request message) for the LTE to the core network 150, wherein the message is for requesting connection release between the base station and the core network. In operation 1123, a connection release command message (e.g., UE context release command message) for the LTE with respect to the base station and the core network may be received from the core network 150. In addition, in operation 1125, the base station 120 may transmit, to the LTE, an RRC release message (e.g., an RRCRelease message) for transitioning the LTE to the RRC idle state. In operation 1127, a connection release completion message (e.g., a UE context release complete message) may be transmitted to the entity of the core network 150. In addition, in operation 1129, the base station 120 may delete UE context information. That is, the base station 120 may delete the context information of the MUSIM LTE 110 stored in the base station 120.

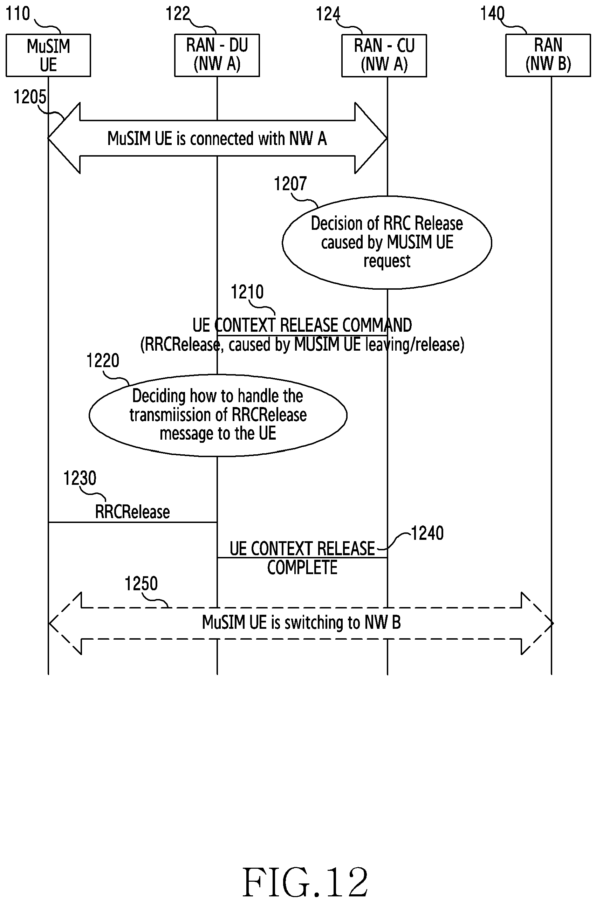

FIG. 12 illustrates an example of signaling for priority processing of RRC connection release message transmission in a DU, during network switching according to embodiments of the disclosure. When the MUSIM LTE 110 is connected to one network, and an RRC connection of the LTE is released for network switching to another network, the DU may support priority processing for transmission of an RRC connection release message that is transmitted to the MUSIM UE 110.

Referring to FIG. 12, as in (b) of FIG. 1, the MUSIM LTE 110 is connected to two networks, i.e., network A and network B, and one network (network A in (a) of FIG. 1) is connected. The MUSIM LTE 110 may perform network switching to the base station 140 of another network (network B in (a) of FIG. 1). Description will be provided later for a procedure for, when the base station of network A includes a central unit (CU) 124 and a distributed unit (DU) 122 as shown in FIG. 2, supporting priority processing for transmission of an RRC connection release message that is transmitted from the DU 122 to the MUSIM UE 110.

Referring to FIG. 12, in operation 1205, the MUSIM UE 110 is connected to the base station 120 of network A. In operation 1207, the CU 124 of the base station of network A may determine to release the RRC connection with the MUSIM LTE in response to a request of the MUSIM UE 110.

In operation 1210, the CU 124 may request, from the DU 122, release of context configured to support the connection with the MUSIM LTE 110. The CU 124 may transfer, to the DU 122, a message (e.g., a UE context release command message) for requesting connection release for the UE in an interface between the CU and the DU (e.g., interface F1 (between gNB-CU and gNB-DU) or interface W1 (between eNB-CU and eNB-DU)). The message (e.g., the UE context release command message) for requesting connection release, which is transmitted in operation 1210, may include an RRC connection release message (e.g., an RRCRelease message) to be transmitted to the MUSIM UE 110 and information (e.g., UE leaving/release cause or indication) indicating that the procedure is performed in response to the MUSIM UE requesting the connection release. In addition, the message (e.g., the UE context release command message) for requesting connection release, which is transmitted in operation 1210, may include a remaining timer value for automatic disconnection from the base station of network A and network switching even if the MUSIM UE 110 receives no RRCRelease message from the base station 120 of network A. In operation 1220, the base station 120 of network A may determine, using the information (e.g., UE leaving/release cause or indication) indicating that the procedure is performed in response to the MUSIM UE requesting the connection release and/or the remaining timer value for performing network switching, a method for transmitting, to the MUSIM UE 110, an RRC message included in the message (e.g., the UE context release command message) for requesting connection release. An example of determining the transmission method is as follows.
Lowering priority of transmitting the RRC message (e.g., the RRCRelease message) to the MUSIM UE 110
Suspending transmission when transmission of the RRC message (e.g., the RRCRelease message) to the MUSIM UE 110 fails for a certain period of time or a certain number of times

In an embodiment, an example of a format included in the message (e.g., the F1 UE context release command message) for the UE, which is used in operation 1210 and is for requesting connection release in the interface (e.g., interface F1 or interface W1) between the CU and the DU, is as shown in FIG. 14B. FIG. 14B illustrates a configuration example of the connection release command message (e.g., the UE context release command message) for the LTE, which is transmitted to the DU from the CU in the base station. The format of FIG. 14B is as shown in Table 5 which will be described later.

**[Table 5]**

| **IE/Group Name** | **Presen ce** | **Ran ge** | **IE type and reference** | **Semantics description** | **Critic ality** | **Assigne d Criticali ty** |
|---|---|---|---|---|---|---|
| Message Type | M | | 9.3.1.1 | | YES | ignore |
| gNB-CU UE F 1 AP ID | M | | 9.3.1.4 | | YES | reject |
| gNB-DU UE F 1 AP ID | M | | 9.3.1.5 | | YES | reject |
| Cause | M | | 9.3.1.2 | | YES | ignore |
| [...] | | | | | | |
| MUSIM UE Leaving Indicator | O | | ENUMERA TED (true, ...) | This IE indicates whether UE leaves the network owing to MUSIM operation | YES | ignore |
| Switching Cause | O | | ENUERATE D or BIT STRING(8) | This IE indicates the reason for a network switching. | YES | ignore |
| Timer Approach for RRC Release | O | | ENUMERA TED (apply timer, ...) | This IE indicates UE can autonomously release RRC connection without receiving RRCRelease message. | YES | ignore |
| Timer for Autonomou s RRC Release | O | | ENUERATE D or BIT STRING(8) | This IE include the timer value that UE waits for RRCRelease message before UE autonomously release RRC connection. | YES | ignore |
| [...] | | | | | | |

In Table 5, "M" refers to mandatory and "O" refers to optional.

The connection release command message (e.g., the UE context release command message) for the UE with respect to the CU and the DU may, in addition to a UE AP ID (e.g., gNB-CU UE F1AP ID and gNB-DU UE F1AP ID) for distinguishing the UE in the interface between the CU and the DU, indicate, in an existing cause IE (e.g., MUSIM UE leaving/release cause), that the connection release command message (e.g., the LTE context release command message) for the LTE, which is with respect to the CU and the DU, has been transmitted from the DU in response to the connection release request of the MUSIM UE, or may separately include an IE (e.g., a MUSIM UE leaving indication IE) indicating that the connection release request has been made by the MUSIM LTE. The message may include one or more pieces of information among cause (e.g., switching cause IE) information for the MUSIM LTE to perform network switching, indication information (e.g., timer approach for RRC release IE) of whether the MUSIM UE is to disconnect an RRC connection even without receiving an RRCRelease message from the base station, and a waiting time (e.g., timer for autonomous RRC release IE) for receiving an RRCRelease message when the MUSIM LTE disconnects an RRC connection even without receiving the RRCRelease message from the base station. The cause information for performing network switching may indicate a cause for performing network switching, and may include, for example, information enabling the LTE to indicate a voice call connection, an emergency call connection, a data connection, or the like.

According to the method determined in operation 1220, the DU 122 may transmit the RRC connection release message (e.g., the RRCRelease message) to the MUSIM UE 110 in operation 1230, and may transmit a connection release completion message (e.g., a UE context release complete message) to the CU 124 in operation 1240. The MUSIM UE 110 having received the RRC connection release message (e.g., the RRCRelease message) from the base station 120 of network A in operation 1230 may be connected to the base station of network B in operation 1250.

By handling transmission of the RRC Release message in the RAN-DU, transmission of an unnecessary paging message may be prevented in network A, and overhead for additional RRC release message transmission may be reduced. Paging and RRC release messages (e.g., RRCRelease) may be reduced by transmitting information, which indicates that the release (or leaving) is due to network switching of the MUSIM UE, in the UE context release message via the front-haul interface.

The disclosure proposes a method for solving a problem that may occur when a UE supporting multiple SIMs is connected to a second network (or network B) while the UE is being connected to a first network (or network A). According to embodiments of the disclosure, an SN base station may configure, for a UE in dual-connectivity, a scheduling gap for the SN base station. The scheduling gap configuration may be performed directly via the SN base station (e.g., SRB 3) or may be performed via an MN base station. Due to this, unnecessary data transmission or reception between the SN and the UE may be reduced. SN scheduling gap configuration may be achieved via an RRC message or NAS signaling, and may be performed without releasing a connection state of RRC connected. Here, the scheduling gap may be configured for periodic or aperiodic/one-shot.

Network switching according to embodiments of the disclosure may be performed by releasing the connection state of RRC connected. In this case, the connection state of RRC connected may be released without a network response in response to a network switching request. Releasing of the connection state of RRC connected may be achieved via an RRC message or NAS signaling, and the network state of the MUSIM LTE may be transitioned to RRC idle or RRC inactive according to a configured policy and the like.

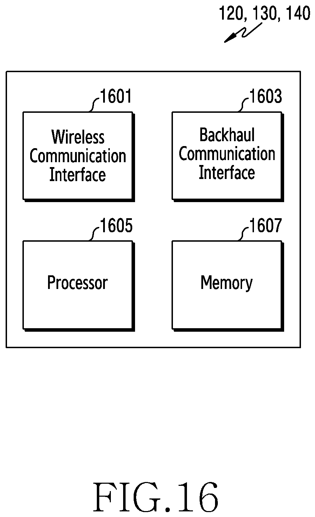

FIG. 16 illustrates an example of a functional configuration of a base station according to embodiments of the disclosure. The terms "... unit", "... device", etc. used hereinafter refer to a unit configured to process at least one function or operation, and may be implemented as hardware, software, or a combination of hardware and software. A base station is a RAN node, and exemplifies the MN 120 and the SN 130 of network A in FIG. 1 or the base station 140 of network B.

Referring to FIG. 16, a base station may include a wireless communication interface 1601, a backhaul communication interface 1603, a processor 1605, and a memory 1607.

The wireless communication interface 1601 performs functions for transmitting or receiving a signal via a wireless channel. For example, the wireless communication interface 1601 performs conversion between a baseband signal and a bit string according to a physical layer standard of the system. For example, when data is transmitted, the wireless communication interface 1601 generates complex symbols by encoding and modulating a transmission bit string. In addition, when data is received, the wireless communication interface 1601 reconstructs a reception bit string by demodulating and decoding a baseband signal. The wireless communication interface 1601 may be configured to perform at least one of the operations described with reference to FIG. 1 to FIG. 15.

The wireless communication interface 1601 up-converts a baseband signal to a radio frequency (RF) band signal, transmits the up-converted RF band signal via an antenna, and then down-converts the RF band signal received via the antenna to a baseband signal. To this end, the wireless communication interface 1601 may include a transmission filter, a reception filter, an amplifier, a mixer, an oscillator, a digital-to-analog converter (DAC), an analog-to-digital converter (ADC), and the like. In addition, the wireless communication interface 1601 may include multiple transmission/reception paths. Furthermore, the wireless communication interface 1601 may include at least one antenna array including multiple antenna elements. In terms of hardware, the wireless communication interface 1601 may include a digital unit and an analog unit, wherein the analog unit includes multiple sub-units according to an operation power, an operation frequency, and the like. According to an embodiment, the wireless communication interface 1601 may include a unit configured to form a beam, i.e., a beamformer.

The wireless communication interface 1601 may transmit or receive a signal. To this end, the wireless communication interface 1601 may include at least one transceiver. For example, the wireless communication interface 1601 may transmit a radio resource control (RRC) message. In addition, for example, a synchronization signal, a reference signal, system information, a message, control information, data, or the like may be transmitted. In addition, the wireless communication interface 1601 may perform beamforming. The wireless communication interface 1601 transmits and receives a signal as described above. Accordingly, all or a part of the wireless communication interface 1601 may be referred to as "transmitter", "receiver", or "transceiver". In addition, in the following description, transmission and reception performed via a wireless channel are used in a sense including that the wireless communication interface 1601 performs processing as described above.

The backhaul communication interface 1603 provides an interface configured to perform communication with other nodes within a network. That is, the backhaul communication interface 1603 converts, into a physical signal, a bit string transmitted from a base station to another node, for example, another access node, another base station, a higher node, a core network, etc., and converts a physical signal received from another node into a bit string.

The processor 1605 controls overall operations of the base station. For example, the processor 1605 transmits and receives signals via the wireless communication interface 1601 or via the backhaul communication interface 1603. In addition, the processor 1605 records and reads data in the memory 1607. In addition, the processor 1605 may perform functions of a protocol stack required by communication standards. To this end, the base station may include at least one processor (including the processor 1605). The processor 1605 may control the base station to perform operations according to various embodiments described above.

The memory 1607 stores data, such as basic programs, application programs, configuration information, etc. for operation of the base station. The memory 1607 may be referred to as a storage unit. The memory 1607 may include a volatile memory, a non-volatile memory, or a combination of a volatile memory and a non-volatile memory. In addition, the memory 1607 provides stored data in response to a request of the processor 1605.

The configuration of the base station 110 illustrated in FIG. 16 is merely an example, and an example of the base station performing various embodiments of the disclosure is not limited from the configuration elements illustrated in FIG. 16. That is, according to various embodiments, some elements may be added, deleted, or changed.

Although the base station is described as one entity in FIG. 16, the disclosure is not limited thereto as described above. The base stations according to embodiments of the disclosure may be implemented to form an access network having a distributed deployment as well as an integrated deployment (e.g., eNB of LTE and gNB of NR). As illustrated to describe the embodiments of FIG. 2 and FIG. 12, the base station may be distinguished as a central unit (CU) and a digital unit (DU), wherein the CU is implemented to perform an upper-layer function (e.g., packet data convergence protocol (PDCP) and RRC), and the DU is implemented to perform a lower layer function (e.g., medium access control (MAC) and physical (PHY)).

In this way, the base station having a separate deployment may further include a configuration element for front-haul interface (e.g., interface F1 or interface W1) communication. According to an embodiment, the base station, as the DU, may perform functions for transmitting or receiving signals in a wired communication environment. The DU may include a wired interface for controlling a direct connection between devices via a transmission medium (e.g., copper wire and optical fiber). For example, the DU may transfer an electrical signal to another device through a copper wire, or may perform conversion between an electrical signal and an optical signal. The DU may be connected to a CU in a distributed deployment. However, this description is not to be construed as excluding a scenario in which the DU is connected to the CU through a wireless network. In addition, the DU may be additionally connected to a radio unit (RU). However, this description is not to be construed as excluding a wireless environment including only a CU and a DU.

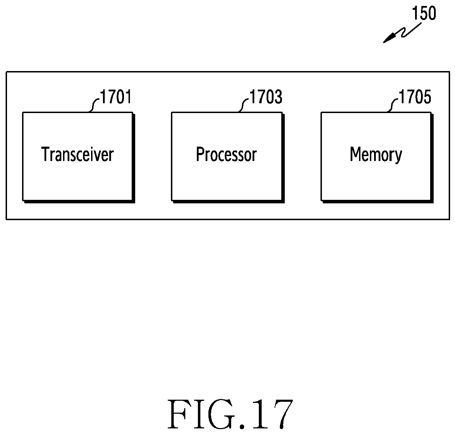

FIG. 17 illustrates an example of a functional configuration of a core network entity according to embodiments of the disclosure. The terms "... unit", "... device", etc. used hereinafter refer to a unit configured to process at least one function or operation, and may be implemented as hardware, software, or a combination of hardware and software. The core network entity exemplifies an entity configured to manage access of a LTE in a corresponding core network. For example, the core network entity may be an AMF of a 5GC. In addition, as an example, the core network entity may be an MME of an EPC.

Referring to FIG. 17, the core network entity may include a transceiver 1701, a processor 1703, and a memory 1705.

The transceiver 1701 may perform functions for transmitting or receiving a signal in a wired communication environment. The transceiver 1701 may include a wired interface for controlling a direct connection between devices via a transmission medium (e.g., copper wire and optical fiber). For example, the transceiver 1701 may transfer an electrical signal to another device through a copper wire, or may perform conversion between an electrical signal and an optical signal. The transceiver 1701 may transmit or receive signals between network entities forming a core network according to wired communication interface standards.

The transceiver 1701 may performs functions to transmit or receive a signal via a wireless channel. For example, the transceiver 1701 performs a function of conversion between a baseband signal and a bit string according to a physical layer standard of the system. For example, when data is transmitted, the transceiver 1701 generates complex symbols by encoding and modulating a transmission bit string. In addition, when data is received, the transceiver 1701 reconstructs a reception bit string by demodulating and decoding a baseband signal. In addition, the transceiver 1701 up-converts a baseband signal into an RF band signal, transmits the up-converted RF band signal via an antenna, and then down-converts the RF band signal received via the antenna into a baseband signal. For example, the transceiver 1701 may include a transmission filter, a reception filter, an amplifier, a mixer, an oscillator, a DAC, an ADC, and the like.

The transceiver 1701 transmits and receives a signal as described above. Accordingly, all or a part of the transceiver 1701 may be referred to as "transmitter", "receiver", or "transceiver". In addition, in the following description, transmission and reception performed via a wireless channel are used in a sense including processing performed as described above by the transceiver 1701.

The processor 1703 controls overall operations of the AMF. For example, the processor 1703 may transmit and receive a signal via the transceiver 1701. In addition, the processor 1703 records and reads data in the memory 1705. In addition, the processor 1703 may perform functions of a protocol stack required by communication standards. According to another implementation example, the protocol stack may be included in the transceiver 1701. To this end, the processor 1703 may include at least one processor.

The processor 1703 may control the AMF to perform operations according to various embodiments of the disclosure. For example, the processor 1703 may receive NAS signaling (e.g., a service request with leaving/release request) transmitted from a LTE via an eNB or a gNB. In addition, for example, the processor 1703 may be configured to perform an SN modification procedure with the eNB or gNB. In addition, for example, the processor 1703 may be configured to transmit a LTE network switching indication to the eNB or gNB. In addition, for example, the processor 1703 may be configured to perform a UE context release procedure with the eNB or gNB. In addition, for example, the processor 1703 may be configured to receive an RRC inactive transition report from the eNB or gNB. Signaling between the UE and the AMF may be NAS signaling. Signaling between the base station (i.e., the RAN node) and the AMF may be an N1N2 message via the NG interface.

The memory 1705 may store data, such as a basic program, an application program, and configuration information, for operation of a network entity. The memory 1705 may include a volatile memory, a non-volatile memory, or a combination of a volatile memory and a non-volatile memory. In addition, the memory 1705 provides stored data in response to a request of the processor 1703.

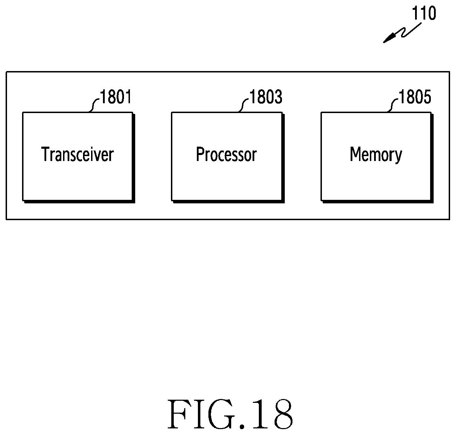

FIG. 18 illustrates an example of a functional configuration of a MUSIM LTE according to embodiments of the disclosure. The terms "... unit", "... device", etc. used hereinafter refer to a unit configured to process at least one function or operation, and may be implemented as hardware, software, or a combination of hardware and software. A UE illustrates the UE 110 of FIG. 1.

The LTE may include a transceiver 1801, a processor 1803, and a memory 1805.

The transceiver 1801 performs functions to transmit or receive a signal via a wireless channel. For example, the transceiver 1801 performs a function of conversion between a baseband signal and a bit string according to a physical layer standard of the system. For example, when data is transmitted, the transceiver 1801 generates complex symbols by encoding and modulating a transmission bit string. In addition, when data is received, the transceiver 1801 reconstructs a reception bit string by demodulating and decoding a baseband signal. According to embodiments of the disclosure, the transceiver 1801 may transmit a NAS message to a core network entity via a base station. According to embodiments of the disclosure, the transceiver 1801 may transmit an RRC message to the base station. The transceiver 1801 may be configured to perform at least one of the operations of a transmission end or the operations of a reception end, which are described with reference to FIG. 1 to FIG. 15.

The transceiver 1801 up-converts a baseband signal into an RF band signal, transmits the up-converted RF band signal via an antenna, and then down-converts the RF band signal received via the antenna into a baseband signal. For example, the transceiver 1801 may include a transmission filter, a reception filter, an amplifier, a mixer, an oscillator, a DAC, an ADC, and the like.

In addition, the transceiver 1801 may include multiple transmission or reception paths. Furthermore, the transceiver 1801 may include an antenna unit. The transceiver 1801 may include at least one antenna array including multiple antenna elements. In terms of hardware, the transceiver 1801 may include a digital circuit and an analog circuit (e.g., a radio frequency integrated circuit (RFIC)). The digital circuit and the analog circuit may be implemented in a single package. In addition, the transceiver 1801 may include multiple RF chains. Further, the transceiver 1801 may perform beamforming. In order to give directivity according to a configuration of the processor 1803 to a signal to be transmitted or received, the transceiver 1801 may apply a beamforming weight to the signal.

The transceiver 1801 may transmit or receive a signal. To this end, the transceiver 1801 may be configured by at least one transceiver. For the transceiver 1801, a downlink signal may include an RRC message (or RRC signaling), a synchronization signal (SS), a reference signal (RS) (e.g., cell-specific reference signal (CRS)), a demodulation(DM)-RS, system information (e.g., MIB, SIB, remaining system information (RMSI), and other system information (OSI)), a configuration message, control information, downlink data, or the like. The transceiver 1801 may transmit an uplink signal. The uplink signal may include an RRC message (or RRC signaling), a NAS message (or NAS signaling), a random-access-related signal (e.g., a random-access preamble (RAP)) (or message 1 (Msg1) and message 3 (Msg3)), a reference signal (e.g., a sounding reference signal (SRS) and a DM-RS), a buffer status report (BSR), or the like.

Specifically, the transceiver 1801 may include an RF processor and a baseband processor. The RF processor performs a function for transmitting or receiving a signal via a wireless channel, such as band conversion and amplification of the signal. That is, the RF processor up-converts a baseband signal provided from the baseband processor into an RF band signal, transmits the converted RF band signal via an antenna, and then down-converts the RF band signal received via the antenna into a baseband signal. For example, the RF processor may include a transmission filter, a reception filter, an amplifier, a mixer, an oscillator, a digital-to-analog converter (DAC), an analog-to-digital converter (ADC), and the like. Although only one antenna is shown in FIG. 2H, the LTE may include multiple antennas. In addition, the RF processor may include multiple RF chains. Furthermore, the RF processor may perform beamforming.

The baseband processor performs a function of conversion between a baseband signal and a bit string according to a physical layer standard of the system. For example, when data is transmitted, the baseband processor generates complex symbols by encoding and modulating a transmission bit string. In addition, when data is received, the baseband processor reconstructs a reception bit string by demodulating and decoding a baseband signal provided from the RF processor. For example, in case of following an orthogonal frequency division multiplexing (OFDM) scheme, during data transmission, the baseband processor generates complex symbols by encoding and modulating a transmission bit string, maps the complex symbols to subcarriers, and then configures OFDM symbols by performing an inverse fast Fourier transform (IFFT) operation and cyclic prefix (CP) insertion. In addition, when data is received, the baseband processor divides a baseband signal provided from the RF processor in the units of OFDM symbols, reconstructs signals mapped to subcarriers via a fast Fourier transform (FFT) operation, and then reconstructs a reception bit string via demodulation and decoding.

The transceiver 1801 transmits and receives a signal as described above. Accordingly, all or a part of the transceiver 1801 may be referred to as "transmitter", "receiver", or "transceiver". The transceiver 1801 according to embodiments of the disclosure may provide access to multiple networks in order to support communication of a LTE supporting MUSIM. Furthermore, the transceiver 1801 may include multiple communication modules to support multiple different radio-access technologies. The transceiver 1801 may include different communication modules to process signals of different frequency bands. For example, the different radio-access technologies may include a wireless LAN (e.g., IEEE 802.1x), a cellular network (e.g., LTE and NR), and the like. In addition, the different frequency bands may include a super-high frequency (SHF) band (e.g., 2.5 GHz and 5 Ghz), a millimeter wave band (e.g., 60 GHz), an NR FR1 band (e.g., 410 MHz to 7.125 GHz), and an NR FR2 band (e.g., 24.25 GHz to 52.6 GHz). In addition, the transceiver 1801 may use a radio-access technology of the same scheme on different frequency bands (e.g., an unlicensed band and a citizen broadband radio service (CBRS) (e.g., 3.5 GHz)).

The processor 1803 controls overall operations of the UE. For example, the processor 1803 may transmit and receive a signal via the transceiver 1801. In addition, the processor 1803 records and reads data in the memory 1805. In addition, the processor 1803 may perform functions of a protocol stack required by communication standards. To this end, the processor 1803 may be configured by at least one processor. The processor 1803 may include at least one processor or micro-processor, or may be a part of a processor. In addition, according to an implementation example, a part of the transceiver 1801 and the processor 1803 may be referred to as a CP. The processor 1803 may include various modules for performing communication. According to various embodiments, the processor 1803 may control the UE to perform operations according to various embodiments described below.

The processor 1803 controls overall operations of the UE. For example, the processor 1803 transmits or receives a signal via the transceiver 1801. In addition, the processor 1803 records and reads data in the memory 1805. To this end, the processor 1803 may include at least one processor. For example, the processor 1803 may be configured as a single chip including a communication processor (CP) configured to perform control for communication and an application processor (AP) configured to control an upper layer, such as an application program. According to embodiments of the disclosure, the processor 1803 may be configured to perform, with a network, operations according to a MUSIM function. According to an embodiment, in an EN-DC environment, the processor 1803 may be configured to communicate an RRC message with an eNB which is an MN, or communicate an RRC message with a gNB which is an SN. Also, according to an embodiment, in an MR-DC environment as well as an EN-DC environment, the processor 1803 may be configured so that the LTE 120 transmits an RRC message to cells by two nodes or receives an RRC message from a cell of each node. In addition, the processor 1803 may control the LTE to perform operations according to the aforementioned embodiments.

The memory 1805 stores data, such as a basic program, an application program, configuration information, and the like for operation of the LTE. The memory 1805 may include a volatile memory, a non-volatile memory, or a combination of a volatile memory and a non-volatile memory. The memory 1805 stores data, such as a basic program, an application program, configuration information, and the like for operation of the UE.

Embodiments of the disclosure propose a device and method for supporting a scheduling gap for network switching in a dual-connectivity situation as well as a standalone situation. That is, unnecessary data transmission and reception in an SN may be reduced by configuring a scheduling gap via signaling with the SN. In particular, such a purpose may be achieved without releasing an RRC connection state (e.g., RRC connected) of a LTE.

In addition, the embodiments of the disclosure propose specific signaling and each entity operation for immediately transitioning an RRC state of a MUSIM LTE to RRC idle or RRC inactive according to network switching even for release of the RRC connection state.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

## Claims

1. A method performed by a secondary node (SN) base station in a wireless communication system, the method comprising:
receiving a first message comprising gap configuration auxiliary information from a multiple universal subscriber identity module (MUSIM) user equipment (UE) (MUSIM UE) for which dual-connectivity with the SN base station and a master node (MN) base station has been configured;
based on the gap configuration auxiliary information, generating scheduling gap configuration information for adjustment of scheduling for the MUSIM UE; and
transmitting a second message comprising the generated scheduling gap configuration information to the MUSIM UE.

2. The method of claim 1, wherein the gap configuration auxiliary information comprises at least one among information comprising at least one of a gap offset, a gap duration, and a gap period, a short-time network switching indication for periodic transmission and/or one-shot transmission (short-time network switching indication for periodic and/or one-shot), a preferred scheduling gap for the periodic transmission and/or the one-shot transmission (preferred scheduling gap for periodic and/or one-shot), and discontinuous reception (DRX) configuration assistance information (DRX assistance information).

3. The method of claim 1, wherein the scheduling gap configuration information comprises at least one of radio resource management (RRM) measurement gap configuration information and information comprising at least one of a gap offset, a gap duration, and a gap period.

4. The method of claim 1, wherein the receiving of the first message comprising the gap configuration auxiliary information comprises receiving the first message comprising the gap configuration auxiliary information via the MN base station, and
the transmitting of the generated scheduling gap configuration information to the MUSIM UE comprises transmitting the second message comprising the gap configuration information to the MUSIM LTE via the MN base station.

5. A method performed by a master node (MN) base station in a wireless communication system, the method comprising:
receiving a first message comprising gap configuration auxiliary information from a multiple universal subscriber identity module (MUSIM) user equipment (UE) for which dualconnectivity with the MN base station and a secondary node (SN) base station has been configured;
based on the gap configuration auxiliary information, generating scheduling gap configuration information for adjustment of scheduling for the MUSIM UE; and
transmitting a second message comprising the generated scheduling gap configuration information to the MUSIM UE.

6. The method of claim 5, wherein the generating of the scheduling gap configuration information for adjustment of scheduling for the MUSIM UE, based on the gap configuration auxiliary information comprises:
transmitting the gap configuration auxiliary information to the SN base station;
receiving scheduling gap configuration information of the SN base station from the SN base station in response to the gap configuration auxiliary information; and
generating the scheduling gap configuration information for adjustment of scheduling for the MUSIM UE, based on a scheduling gap of the SN base station and scheduling gap configuration information of the MN base station.

7. The method of claim 5, further comprising transmitting the generated scheduling gap configuration information to the SN base station.

8. A method performed by a base station in a wireless communication system, the method comprising:
determining to transition a multiple universal subscriber identity module (MUSIM) user equipment (UE) to one of a radio resource control (RRC) idle state or an RRC inactive state; and
in case of determining to transition the MUSIM UE to the RRC inactive state, transmitting, to the MUSIM UE, an RRC connection release message indicating transition to the RRC inactive state, and transmitting, to an access and mobility management function (AMF), a report message notifying that the MUSIM UE has transitioned to the inactive state.

9. The method of claim 7, wherein the report message comprises a cause information element (IE) indicating a cause for connection release of the MUSIM UE.

10. The method of claim 7, further comprising receiving a network switching indication (UE network switching indication) message from the AMF.

11. The method of claim 7, further comprising, in case of determining to switch the LTE to the RRC idle state, transmitting a connection release request message for the MUSIM LTE to the AMF,
wherein the connection release request message for the MUSIM UE comprises a cause IE indicating a cause for connection release of the MUSIM UE.

12. A method performed by an access and mobility management function (AMF) in a wireless communication system, the method comprising:
receiving a non-access stratum (NAS) message comprising information for requesting of connection release from a network by a multiple universal subscriber identity module (MUSIM) user equipment (UE);
based on the NAS message, determining to transition the MUSIM LTE to one of a radio resource control (RRC) idle state or an RRC inactive state; and
in case of determining to transition the MUSIM UE to the RRC inactive state, transmitting a network switching indication (LTE network switching indication) message to a base station.

13. The method of claim 11, further comprising receiving, from the base station, a report message indicating that the MUSIM UE has transitioned to the RRC inactive state, in response to the network switching indication message.

14. The method of claim 11, further comprising, in case of determining to switch the MUSIM UE to the RRC idle state, transmitting a MUSIM UE connection release command message to the base station,
wherein the MUSIM UE connection release command message comprises a cause information element (IE) indicating a cause for connection release of the MUSIM UE.

15. The method of claim 11, further comprising updating paging restriction information for the MUSIM UE.
